# EUROPEAN PATENT SPECIFICATION

(11) **EP 3 958 016 B1**
(45) Date of publication and mention of the grant of the patent: **22.01.2025**
(21) Application number: 20191928.9
(22) Date of filing: 20.08.2020
(51) Int. Cl.: G01S 13/931, B60W 30/12, G08G 1/16

(54) **STATIONARY OBJECT DETECTION**
DETEKTION STATIONÄRER OBJEKTE
DÉTECTION D'OBJETS STATIONNAIRES

(43) Date of publication of application: 23.02.2022
(73) Proprietor: Zenuity AB, 413 46 Göteborg (SE)
(72) Inventor: BÄLTER, Peter, 426 71 Västra Frölunda (SE)
(74) Representative: Zacco Sweden AB

(56) References cited:
- DE-A1- 102012 208 302
- US-A1- 2007 010 937

## Description

### TECHNICAL FIELD

The disclosed technology relates to methods of detecting stationary objects, for example, to methods of detecting stationary objects having a certain type of physical attribute in object data comprising sensed stationary objects and sensed non-stationary objects, and to related aspects.

The disclosed technology is suitable for use by vehicles including vehicles which assist drivers in a semi-autonomous manner as well as vehicles which are fully autonomous. The disclosed technology may be implemented in a control system of such vehicles also referred to herein as ego vehicles. The disclosed technology can be implemented in a control system of an ego vehicle to detect and remove one or more types of stationary object detections from a stream of sensed object detections generated by one or more radar sensors of that ego vehicle. The disclosed technology is particularly useful in some embodiments for removing sensed detections of particular types stationary objects such as road or lane-side structures, for example, guard rails or similar barrier type structures which can be arranged alongside a path being taken by a vehicle. Such structures can extend for a long distance and can generate large numbers of sensor detections in a sensing cycle.

The disclosed technology seeks to provide a solution to the problem of how to reliably reduce the volume of data which a perception system of an ego vehicle needs to process to provide reliable information about the surrounding sensed environment of the ego vehicle. The disclosed technology seeks to provide a way of rapidly determining if a group of sensed stationary detections which share one or more attributes are collectively a result of sensing part (or all) of a particular type of stationary object such as, for example, part (or all) of a road or lane side barrier or guard rail or the like.

The techniques disclosed allow sensed detections of guard rails/barriers and the like to be removed in a batch-processing pre-processing stage in a reliable and time-efficient manner which reduces the likelihood of errors from miscategorising similar sensed detections of other objects which may generate similar sensor detections. Such similar sensor detections include, for example, radar detections of temporarily stationary objects such as vehicle queues which may extend in a similar manner along a road/lane in a road, in particular at slip-road type junctions on relatively straight road section. The disclosed technology reduces in a pre-processing stage the volume of data comprising sensed detections which the processing components of the perception system and/or the control system would otherwise have to analyse in more detail to distinguish temporarily stationary objects from truly stationary objects in order to better understand the environment of the ego vehicle.

### BACKGROUND

Autonomous or driver assisted ego vehicles are provided with complex sensor systems to allow their control systems to understand the environment in which the ego vehicle is in, for example, so that the ego vehicle can be made aware of its location and lane position and so it can detect and navigate around potential obstacles. An ego vehicle travelling (or stationary) along a lane on a highway faces the challenge of reliably distinguishing between moving and stationary sensed objects in the stream of sensed detections which are generated by its sensor systems. A moving object which may represent other vehicles, pedestrians, or animals may be monitored and tracked, and a predicted path may be generated for a moving object to avoid a collision taking place. Stationary objects, on the other hand, may represent buildings, lane dividers, slip roads, bridges, broken down vehicles, side banks and guard rails, and the like, are usually not tracked in the same manner as moving objects.

One problem that perception systems have to handle is that queues of stationary vehicles may generate sensor detections which are easily be confused with sensed detections of elongate structures such as barriers or guard rails. As barriers and guard rails run alongside roads, they can generate a large number of sensed detections by long range sensors such as radar sensor systems in the same manner as a queue of vehicles.

It is desirable if the large volumes of sensed detections of stationary large objects (for example, such as the elongate structures forming guard rails or road-side barriers or the like) can be distinguished from temporarily stationary objects (for example, queues of stationary vehicles)
as quickly as possible. Achieving this in a safe, reliable manner is problematic, however, due to the volume of such detections which may be sensed in a sensing cycle.

Known techniques for removing barrier and guard rail detections to reduce the amount of sensed object detections which require further processing and classification by a perception system and/or control system of an ego vehicle can be unsatisfactory in various ways. For example, some may process data sufficiently quickly but fail to distinguish such stationary objects in a reliable manner from the detection of pseudo-stationary objects such as queues of vehicles which are temporarily stationary. Some may take too long to reliably to identity which sensed detections can be reliably removed. Some may not be effective enough, for example, the volume of sensed detections which are reliably identified (i.e. for which there is a high confidence that they can be removed as they are sensed detections of truly stationary objects) as a proportion of the total number sensed detections being generated each sensing cycle is too low.

The disclosed technology seeks to obviate and/or mitigate the problems with known stationary object detection techniques by providing a computer-implemented method which provides a reliable and rapid technique for detecting certain types of stationary objects. The techniques work specifically for large stationary objects having attributes which cause a statistically significant number of sensor detections generated in any given sensing cycle to share certain characteristics in the sensor data, as this allow such sensed detections to be safely and rapidly removed in a batch pre-processing stage of an ego-vehicles perception system. Such stationary objects generate groups of sensor detections which have certain characteristics which allows them to be quickly distinguished in the pre-processing stage from sensor detections of pseudo-stationary, i.e. temporarily stationary, objects such as, for example, queued vehicles.

US2007/010937 discloses a road shape recognition apparatus where front radar recognizes a still object. A process generates a still object map that shows a relative position between the still object and a subject vehicle. The process groups still objects in the still object map. In terms of each individual still object group, the process selects a left or right evaluation map depending on whether the still object group is positioned to the left or right side of a road. The process defines an additive value for the still object group based on the distance between the vehicle and the still object group and based on the vehicle speed. The process adds the still object group's additive value to the selected evaluation map. The process subtracts a subtractive value from part of the evaluation map where no values are added. The process recognizes a road shape based on the evaluation map.

DE10 2012 208302 discloses a method that involves detecting a surrounding of a vehicle repeatedly at the preset time interval, by ultrasound sensors. The periodically recurring objects are determined based on the measured values of the ultrasonic sensors. The lateral distance of the vehicle to periodically recurring objects is determined, and the information regarding the lateral distance of the vehicle to the object is provided to the vehicle driver. Independent claims are included for the following: a computer program for providing information regarding environment of vehicle; and a vehicle driver assistance system.

### SUMMARY OF THE INVENTION

This summary section presents some of the features of the disclosed technology in summary form. The preferred aspects and embodiments of the disclosed technology are defined by the accompanying independent and dependent claims claims.

The disclosed technology comprises examples of various embodiments of methods and related aspects concerning detecting, identifying and/or classifying sensor detections present in a stream of sensor detections which includes sensor detections of one or more stationary objects. In particular the disclosed technology relates to methods and related aspects which can be used to distinguish truly stationary objects from apparently stationary but potentially moving objects which are detected in the environment around an ego vehicle by an array of sensors of that ego vehicle.

The example method aspects disclosed can be used to identify and/or classify sensed detections of one or more stationary objects in which the objects have physical attributes which result in a group of such sensed detections sharing certain characteristics or attributes, for example, position attributes. Whilst such shared attributes are detectable in individual sensed detections, it is only when processed as a group that it becomes possible to have a higher confidence that they originate from the same object. Advantageously, such large groups which share characteristics or attributes allow each sensed stationary detection associated with a particular group to be determined more reliably as being a sensed detection of a particular type of stationary object. This allows the sensed stationary detections to be processed as a batch or group of stationary detections, and for all of the stationary detections in a groups of stationary detections to be distinguished at group level from sensed detections of other stationary or pseudo stationary object.

An example of a stationary object of a predetermined type having such physical attributes comprises an elongate object of a type such as a barrier or guard rail. This type of structure is often found arranged alongside roads/lands or may be provided in other locations along a path followed by an ego vehicle. Such stationary objects often have a physical attributes are regular or that exhibit a certain degree of regularity over a long distance alongside a road or lane. For example, support struts may usually provided at regular intervals to support a barrier or guard rail along a lane or path taken by an ego vehicle. Gaps between barrier and/or rail sections may also be regularly spaced and of a consistent size. The regularity in such structural features can cause a degree of regularity in the positions of a plurality of sensed detections of such large objects by long range sensing systems such as a radar system of an ego vehicle.

The extent of large stationary objects such as barrier rails and the like, which give rise to a large number of sensed detections in any sensing cycle. The regular physical attributes of such large stationary objects gives rise to a corresponding regularity when the sensed detections are analysed as a group. For example, a barrier or guard rail may generate radar sensor detections in one or more of the rear detection, front detection and side zones of an ego vehicle if not blocked by other sensed objects. Some of the preferred embodiments of the disclosed technology take into account sensor detections from the full surrounding environment of an ego vehicle. This allows a larger number of sensor detections to be collectively analysed than if just sensor detections from ahead of the vehicle were used which increases the reliability of detecting truly stationary objects using the disclosed technology.

Some disclosed example embodiments of a preferred computer-readable storage medium store one or more programs configured to be executed by one or more processors of a vehicle control system, the one or more programs comprising instructions for performing the method according to any one of the embodiments disclosed in the description, claims or accompanying drawings.

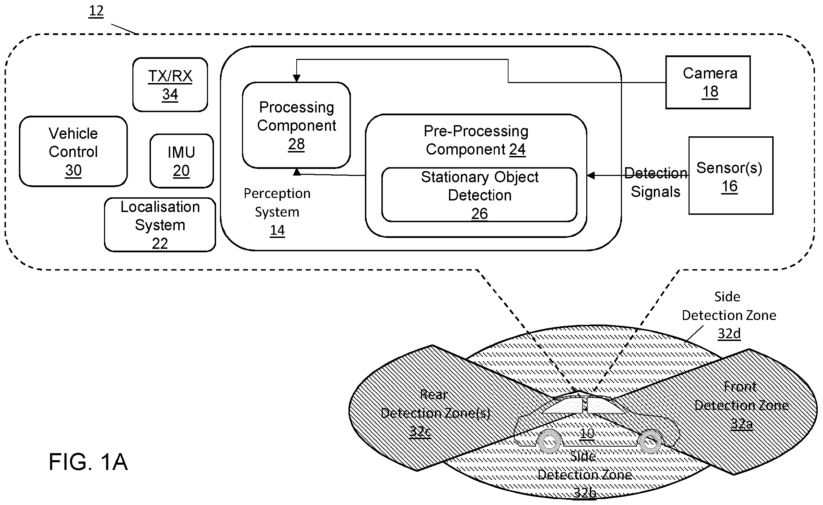

Some disclosed example embodiments of a preferred vehicle comprising a perception system including at least one sensor for monitoring a surrounding environment of the vehicle. The perception system may be part of a control system or device according to any one of the embodiments disclosed herein. Vehicle data may be provided to the perception system and/or control system from other vehicle components, for example, from an ego vehicle motion sensing device. For example, an inertial measurement system or unit (shown in Fig. 1A as IMU 20) can measure an inertial movement of the vehicle and a localization system (for example, such as Fig. 1A, localization system 22) can be used to monitor a geographical position and a heading of the vehicle.

The disclosed computer-readable storage medium and vehicle aspects have similar advantages and preferred features are present as in the method aspect of the disclosure.

The term "non-transitory," as used herein, is intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link. Thus, the term "non-transitory", as used herein, is a limitation of the medium itself (i.e., tangible, not a signal) as opposed to a limitation on data storage persistency (e.g., RAM vs. ROM).

It should be emphasized that the term "comprises/comprising" when used in this specification is taken to specify the presence of stated features, integers, steps, or components. It does not preclude the presence or addition of one or more other features, integers, steps, components, or groups thereof.

These and other features and advantages of the present invention will in the following be further clarified with reference to the embodiments described in more detail hereinafter.

### BRIEF DESCRIPTION OF THE DRAWINGS

Further objects, features and advantages of the disclosed technology will now be described with reference being made to the accompanying drawings, which illustrate the embodiments by way of example only, and in which:
Fig. 1A is a schematic side view of an example of an ego vehicle in accordance with some of the embodiments disclosed herein;
Fig. 1B is a schematic view of functional components comprising an example control system of the ego vehicle shown in Fig. 1A;
Fig. 2A is a schematic overhead view of an example environment of an ego vehicle in an outer lane according to Figs. 1A and 1B;
Fig. 2B is a schematic overhead view of another example environment of the ego vehicle in an inner lane according to Figs. 1A and 1B;
Fig. 3 illustrates an example plot of example sensed detections of the environment of an ego vehicle;
Fig. 4 illustrates schematically an example histogram of lateral-position groupings of sensed detections according to some of the embodiments of the methods of detecting a stationary object disclosed herein;
Fig. 5 illustrates schematically an example of sensed detections of the environment of the ego vehicle which have been associated with a confidence level for being sensed detections of a particular type of object;
Fig. 6 illustrates an example of how a sensed detection can be identified with a level of confidence as a sensed detection of a particular type of object using some of the embodiments of the methods of detecting a stationary object disclosed herein;
Fig. 7 illustrates an example embodiment of a method of detecting a stationary object in accordance with some of the embodiments of the technology disclosed herein;
Fig. 8 illustrates another example embodiment of a method of detecting a stationary object in accordance with some of the embodiments of the technology disclosed herein;
Fig. 9 illustrates additional steps performed in a method of detecting a stationary object in accordance with some of the embodiments of the technology disclosed herein;
Fig. 10A illustrates an example of sensed detections by an ego-vehicle before a method in accordance with some of the embodiments of the technology disclosed herein is performed; and
Fig. 10B illustrates how some of the sensed detections shown in Fig. 10A are removed after a method of detecting a stationary object in accordance with some of the embodiments of the technology disclosed herein has been performed.

### DETAILED DESCRIPTION

Those skilled in the art will appreciate that the steps, services and functions explained herein may be implemented using individual hardware circuitry, using software functioning in conjunction with a programmed microprocessor or general purpose computer, using one or more Application Specific Integrated Circuits (ASICs) and/or using one or more Digital Signal Processors (DSPs). It will also be appreciated that when the present disclosure is described in terms of a method, it may also be embodied in one or more processors and one or more memories coupled to the one or more processors, wherein the one or more memories store one or more programs that perform the steps, services and functions disclosed herein when executed by the one or more processors.

In the following description of exemplary embodiments, the same reference numerals denote the same or similar components. A vehicle is in the present context to be understood as a road or off-road vehicle. Examples of a vehicle include a car, a bus, a truck, or construction vehicle, or the like. The term ego vehicle refers to such vehicles when equipped with suitable components providing at least a sensor system and a control system including a perception control system for implementing a method of stationary object detection according to the embodiments disclosed herein.

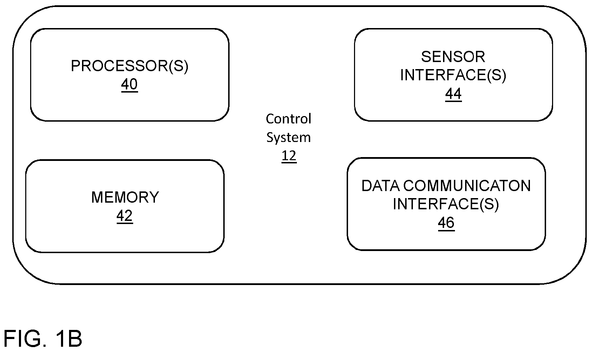

Fig. 1A is a schematic side view of an example of an embodiment of an ego vehicle 10 which comprises a vehicle control system 12 which performs a method according to any of the embodiments disclosed herein. The control system 12 shown in Fig. 1A includes a perception system 14, one or more sensors 16, a camera system 18, a vehicle inertial measurement system 20 (shown as IMU 20 in Fig. 1), a localisation system 22, a vehicle control system 30 and a data communications module 34 (shown in Fig. 1A as TX/RX).

In some embodiments, the control system 12 of the ego-vehicle 10 shown in Fig. 1A is configured to implement a method of detecting stationary objects based on positional attributes of a group of sensor detections of one or more particular types of stationary objects. Some examples of the method comprise receiving sensor signal data comprising stationary and non-stationary detections, for example in a stream of sensor detections, from a surrounding environment of the ego-vehicle. The method determines at least one group of stationary detections which meet one or more lateral position selection criteria based on the lateral position of each stationary detection from a direction faced by the ego-vehicle. The method also determines at least one group of stationary detections sharing similar lateral positions relative to the longitudinal axis of the ego vehicle which also meet one or more group regularity selection criteria. An example of a group regularity selection criteria is a selection criterion based on the regularity of the differences in position between pairs of sequentially positioned stationary detections in the group in the direction along the longitudinal axis of the ego vehicle, for example, along the longitudinal axis in the direction faced by the ego vehicle and/or along the same axis but in the direction behind the ego vehicle. The method further comprises determining one or more groups of stationary detections which meet both the lateral selection criteria and the group regularity selection criteria. The stationary detections in such a group can then be determined or classified in a batch as corresponding to the same type of elongate stationary object. In some examples, the method is used to detect one or more groups of stationary detections corresponding to at least one pre-determined type of stationary object in each sensing cycle (where a sensing cycle refers to each cycle of detecting sensor signals and processing them). Each group of sensed detections can then be either tagged and retained, or filtered (or otherwise removed), in a batch from the stream of sensor signal data generated in each sensing cycle before that cycles stream of sensed detections are forwarded to one or more other data processing components of the perception system 14 of the control system 12 for further analysis.

Some embodiments of the control system 12 include a velocity determining means which is used by the perception system 14 in some embodiments of the disclosed technology. In some embodiments the velocity determining means comprise a localisation system 22 and an inertial measurement unit 20 for monitoring a velocity of the vehicle 10 which generate data used by the perception system however, in some embodiments, only the localisation system 22 is used as the velocity determining means.

A computer-readable storage medium which stores one or more programs which are configured to be executed by one or more processors of a vehicle control system on such an ego vehicle may be used to perform a method as disclosed herein. The one or more programs comprising instructions for performing such a method may be used to configure processors as software or provided in a form which configures the processing steps of the method in circuitry.

The example embodiment of the perception system 14 of the control system 12 shown in Fig. 1A will now be described in more detail. Perception system 14 receives raw sensor data from one or more sensors or sensor arrays 16. This sensor data will contain sensed detections from the detection zones 32a,b,c,d which form a sensed environment 32 surrounding the ego vehicle 10. The sensed detections include both stationary and non-stationary object sensed detections. These are processed by the perception system 14 to implement a method of detecting stationary objects including detecting one or more types of stationary objects. As shown in the embodiment of Fig. 1A, the perception system includes a main processing component 28 and pre-processing component 24. The pre-processing component 24 includes a processing component shown schematically in Fig. 1A as stationary object detection component 26 which performs a method of detecting stationary objects according to the embodiments of the invention disclosed herein.

The perception system 14, for example, the pre-processing component 24, first distinguishes the sensed detections of moving objects from sensed detections of objects which were stationary when they were sensed. This may be performed by the pre-processing stationary object detection component 26 in some embodiments of the perception system 14. For example, in some embodiments radial velocity of a stationary detection is calculated by the pre-processing component 24 using a suitable technique, for example, a technique known to those skilled in the art. For example, a stationary check is performed within the stationary object detection component 26 in some embodiments by checking radial velocity to a threshold (for example, 1 m/s). This threshold can be reduced to a lower value if the amount of noise generated by the sensors and the quality of the signal of the ego vehicle motion (amongst other things) supports this (e.g. to 0.5 m/s or less).

In some embodiments, the perception system 14 is also be configured to fuse sensed detections from the sensors 16 with image data generated by a camera system 18. In some embodiments the fusing of sensor detections such as radar sensed detections with camera images is performed by processing component 28. The radar sensed detections which are fused may comprise a filtered stream of sensed detections which have been processed by the pre-processing component 24.

In some embodiments, the pre-processing stage 24 is configured to use different resources to those used by the main processing component 28. In some embodiments, however, including embodiments where the pre-processing stage 24 uses information such as information relating to the yaw rate and/or the curvature of the ego-vehicle which is fed-back from the main processing component 28, one or more processor and/or memory resources may be shared with main processing component 28. Main processor component 28 and/or pre-processing component 24 are configured in some embodiments to determine road curvature and/or the ego-vehicle yaw to control whether the pre-processing component 26 performs a method of stationary object detection according to the disclosed embodiments. If the road curvature and/or yaw of the ego-vehicle do not meet certain conditions to allow an assessment of the position of a group of sensed detections in the ego-vehicle co-ordinate system, then in some embodiments performing the method is suspended (although in others, the method may be modified to take into account the road curvature/yaw conditions). In this way, providing the road is substantially straight and the ego-vehicle is positioned substantially aligned with the road, for example, such that the longitudinal axes of the ego-vehicle and road are substantially parallel within one or more the detection zones of the ego vehicle, the object recognition algorithm used to implement the method of detecting objects of a predetermined type will be executed by the stationary object detection component/module/unit 26 of the pre-processing stage 24.

In some example embodiments of the control system 12 disclosed herein, the pre-processing component 24 may be implemented as a separate component independently of the perception system 14 rather than as a part of it as in the embodiment shown in Fig. 1A.

In the embodiment shown in Fig. 1A, some types of sensor signals (for example, such as imaging data from camera/camera array 18) are sent directly to the main processing component 28 of the perception system 14. Sensor detections derived from signals from one or more other types of sensors 16 are first pre-processed by a pre-processing component 24 by performing a method of stationary object detection which detects if a sensed detection is of a stationary object or of a moving object. Various techniques are known in the art for determining if a sensor such as a radar sensor which has emitted a sensing signal has sensed a moving or stationary object.

Examples of sensors 16 included LIDAR/RADAR sensor(s)/sensor arrays which can provide long range detection (for example, up to 80 meters or even longer to 200 meters or more). Such long range sensors 16 can generate a high volume stream of sensed detections due to their range. By sending the sensed detections to the pre-processing component 24, the stationary object detection component 26 can determining which sensed detections are of certain types of stationary objects in a manner which allows them to be distinguished from sensed detections of other stationary objects.

In some embodiments of the perception system 14, the sensed detections are tagged by the pre-processing stage stationary object detection module 26 as sensed detections of a particular type of stationary object, for example, using one or more of the techniques disclosed herein. In some embodiments, the tagged sensed detections are provided with an indication of a confidence score as being sensed detections of that particular type of stationary object. In some embodiments, the tagging is provided as meta-data attached to the data representing a sensed detection.

In some embodiments, once a sensed detection is determined to be a sensed detection of the particular type of object, it is removed from the stream of sensed detections the pre-processing unit is processing from the sensors so that the main processing unit 28 receives a smaller volume of sensor data than it would receive if the sensor data was not first pre-processed. In this way, by removing sensed detections of certain types of stationary objects before the sensor stream is forwarded to the main processing component 28, fewer false objects are produced by the main processing component 28 and the computational load on the main processing component 28 may be reduced.

In some embodiments, the stationary object detection component 26 of the pre-processing component 24 provides a stationary object classification confidence score which classifies sensed detections as being detections of a particular type of stationary object with an indication of the confidence where the classification score is binary, meaning a sensed detection is either classified as a sensed detection of a particular type of stationary object or it is not classified as such. In other example embodiments, the classification may include one or more intermediate levels of confidence/confidence score values.

In some embodiments, all sensed detections are tagged with an indication of the confidence they may be sensed detections of a particular type of object for example, they may be assigned high, medium or low levels of confidence, and all are forwarded to the main processing component 28. In some embodiments, the sensed detections are tagged with only intermediate levels of confidence and are forwarded to the main processing component 28 as candidate detections of that particular type of stationary object and the high confidence sensed detections are removed/ discarded.

In some embodiments, the particular type of stationary object comprises a pre-determined type of object having one or more attributes which are represented by one or more detectable characteristics of one or more stationary sensed detections.

In some embodiments, the method is applied to a plurality of different particular types of stationary object, where the plurality of different types of stationary objects share in common one or more attributes which are represented by one or more detectable characteristics of one or more stationary sensed detections.

In some embodiments, the method is applied to a plurality of different particular types of stationary object, where each different type of stationary objects is associated with one or more attributes which are represented by one or more detectable characteristics of one or more stationary sensed detections.

In this manner the methods disclosed which are described as relating to determining one particular type of stationary object should also be considered to be suitable for distinguishing sensed detections of multiple different types of stationary objects from sensed detections of other stationary objects.

If a sensed detections is detected or classified as belonging to one or more pre-determined types of stationary objects such that the detection or classification of the sensed detection can be considered to correspond to a truly stationary object, such sensed detections are filtered or otherwise removed from the stream of sensed detections which are passed on to the main processing component 28 for further analysis in some embodiments.

In some embodiments, the main processing component 28 performs further analysis to distinguish between stationary and non-stationary objects and/or to track non-stationary objects sensed as being in the environment 32 of the ego vehicle. In some embodiments, processing component 28 performs further processing of received sensor data including sensed detections such as fusing the sensor detection data with camera image data and/or mapping and/or data provided by an inertial system 20 or localisation system 22 to determine more information about the environment of the ego-vehicle 10 and/or to further detect stationary and/or non-stationary objects. Non-stationary objects which are sensed can then be tracked and their movements may be predicted by the perception system 14 or by another component of the control system 12.

The use of a pre-processing component 24 to remove from the data stream sensed detections which are confirmed as corresponding to a particular type(s) of stationary objects advantageously enables the other components such as processing component 28 of the perception system 14 to generate information about the sensed environment 32 surrounding the ego vehicle 10 using a smaller volume of data. The method potentially also allows the analysis to use fewer computational resources and/or provide results more quickly as the data processing involves processing a smaller volume of data. This allows output from the perception system 14 which comprises information about the sensed environment 32 of the ego vehicle 10 to be used by a vehicle control system 30 as shown in Fig. 1A to control the motion of ego vehicle 10 in a manner which is more responsive which can make the ego vehicle safer in certain rapidly changing environments 32.

Some embodiments of the perception system 14 which use an embodiment of a method of detecting stationary objects including one or more types of pre-determined stationary object described receive raw sensor data from the one or more cameras 18 and one or more types of long-range sensors 16 for example, LIDARs, RADARs, or ultrasonic sensors. The data from the sensors 16 (for example, the radar or LIDAR sensors 16) is only received after this data has been pre-processed. Some embodiments of the perception system 14 then fuse the sensed detections from sensors 16 with image data from the cameras 18 to convert the raw signal data comprising sensed detections and images into scene understanding which is then output to the other parts of the vehicle control system 12 such as vehicle control component 30 shown in Fig. 1A.

Some embodiments of the perception system 14 disclosed herein below also utilise localisation data and/or IMU data and may also take into account map data for use in generating scene understanding of the environment of the ego vehicle 10. For example, in some embodiments, such as that shown in Fig. 1A, localization data is provided by a localisation system 22 which is configured to monitor a geographical position and heading of the vehicle 10, for example, using a Global Navigation Satellite System (GNSS), such as a geographical positioning system (GPS). Other positioning technology may be used instead or in addition however in other embodiments of localization system 22. For example, localization data may alternatively be realized using a Real Time Kinematics (RTK) GPS if greater accuracy is desired in some embodiments.

For example, in some embodiments, the IMU 20 is configured to measure the inertial movement of the ego-vehicle 10 with six degrees of freedom by using three accelerometers and three gyroscopes, however, other IMU device configurations could be used in some other embodiments of the disclosed technology. Various combinations of localization and IMU technology are thus possible.

In some examples of some embodiments, the IMU 20 and/or the localisation unit 22 are configured to provide data to the main data processing component 28 of perception system 14 as well as or instead of other components of the control system 12, such as vehicle control 30. However, in some embodiments, in addition or instead, some or all of the information generated by the IMU 20 and/or the localisation unit 22 is provided to the pre-processing component 24 either directly or indirectly (for example, the main processing unit 28 may provide this information to the pre-processing component 24).

The information data from the IMU 20 and/or the localisation unit 22 can be used to generate an ego vehicle motion signal which is used by the main processing component 28 of the perception system, for example, the motion signal may provide information on the yaw rate of the vehicle 10. In some embodiments, where the pre-processing unit has access to this data, the yaw of the vehicle (i.e. its angular orientation relative to the longitudinal axis of the road) is used in the method of stationary object classification according to some embodiments of the technology disclosed later herein below.

In some embodiments of the control system 12, vehicle data comprises data relating to a geographical position of the vehicle 10, a heading (or bearing or direction) of the vehicle 10 and a speed of the vehicle 10. The vehicle data may for example be obtained directly from a GPS unit such as the localization component 22 of the vehicle 10 shown in Fig. 1A in some embodiments. This data may be used by the processing component 28 and/or the pre-processing component 24 in some embodiments.

The environment 32 surrounding the ego vehicle 10 in Fig. 1A comprises the sensed region within which stationary and non-stationary objects are capable of being sensed by the sensors 16, 18 of the vehicle 10. The ego-vehicle does not need to be moving when the method of stationary object detection is performed in some embodiments.

Environment 32 is represented in Fig 1A by multiple sensor detection zones 32a, b, c, d. In the example embodiment shown in Fig. 1A, the plurality of detection zones 32a,b,c,d collectively provide a near 360° or 360° (i.e. 360 degrees in a field of view) coverage, which enables the method to use a larger number of detections than just forward facing sensors could provide. The detections located rearwards of the ego-vehicle can be assessed in respect to the vehicles path when assessing to what extent stationary detections may be consistently aligned at various lateral distances from the ego-vehicle 10. For example, at least one camera 18 used by perception system 14 is forward looking into zone 32a and is configured to detect, for example, objects such as at least lane-markings on a road in at least the forward detection zone 32a shown in Figure 1. Other directions may be covered by one or more cameras, for example, one or more cameras may face rearwards (relative to the direction the vehicle 10 is facing) and so provide coverage for rear detection zone 32, other cameras may have fields of view which cover side detection zones 32b,d. Alternatively, one or more omnidirectional cameras (or camera arrays) could be used in some embodiments.

Similar levels of 360° or near 360° coverage is also provided by the other one or more sensors 16. For example, sensors 16 may comprise RADAR, LIDAR or ultrasound sensors which are configured to provide sensor coverage in the forward detection zone 32a, rear detection zone 32c and also in side detection zones 32b and 32d so that the environment 360 degrees around the vehicle is fully sensed.

In some embodiments, the processors 40 forming data processing component 28 are configured to receive map data including a lane geometry of the surrounding environment of the vehicle in the form of a set of candidate lanes. The map data may be in the form of a HD map comprising information about roads having multiple parallel lanes, each of which has a centre line represented as a polyline. The polylines are generally two-dimensional, defined by the longitude and latitude of the start and end of each line segment. Also, left and right lane markers signifying the lane border, are polylines. They are also associated with their marker type (e.g. dashed or solid). The map data may also comprise road delimiters such as guard rails, speed limits, lane orientation, etc.

The range of the radar sensor systems can be significantly longer than that of camera sensors (typically camera ranges are 25 m but can range to 100m). A typical radar sensor range for example, may be 80 meters, but longer range radar systems can support ranges of 80m to 200m or greater. The zones of protection may shown in Fig. 1 may not extend as far laterally as they do to the front and/or back in some embodiments, but in other embodiments they may. In some examples, the actual sensed range may be limited by nearby objects blocking the sensors.

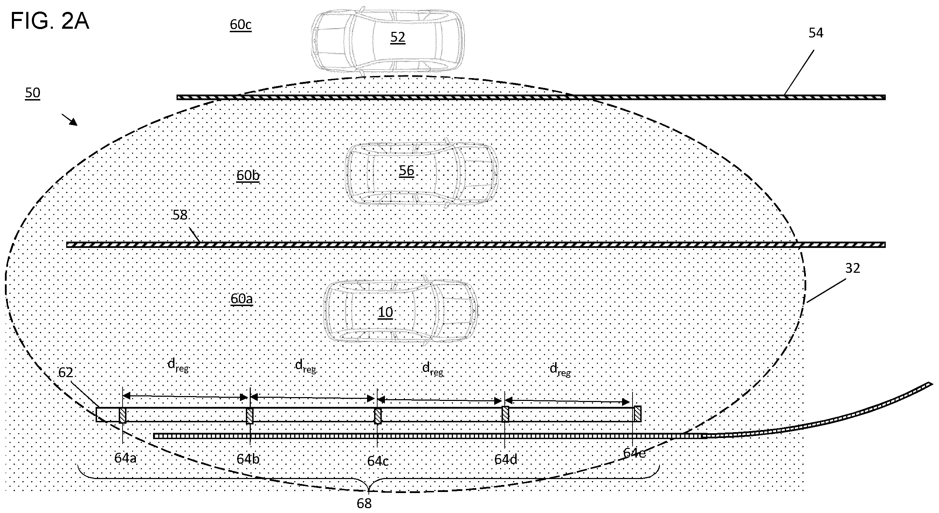

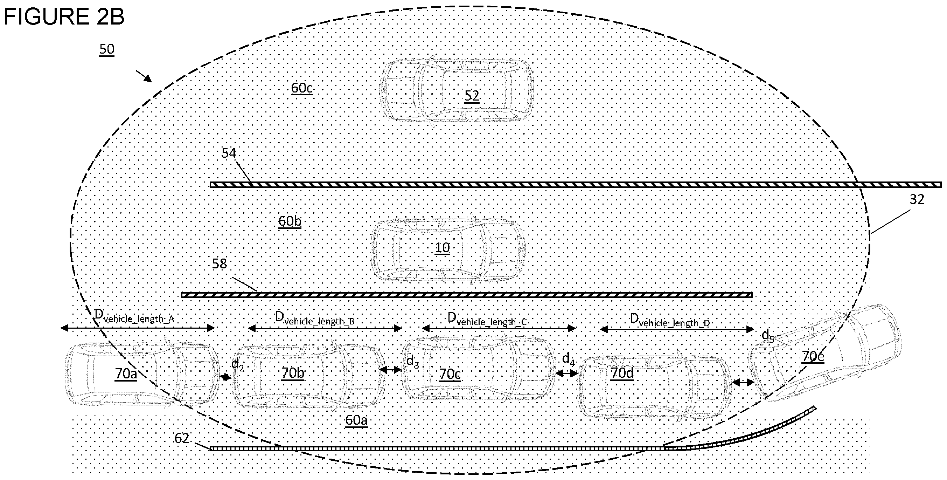

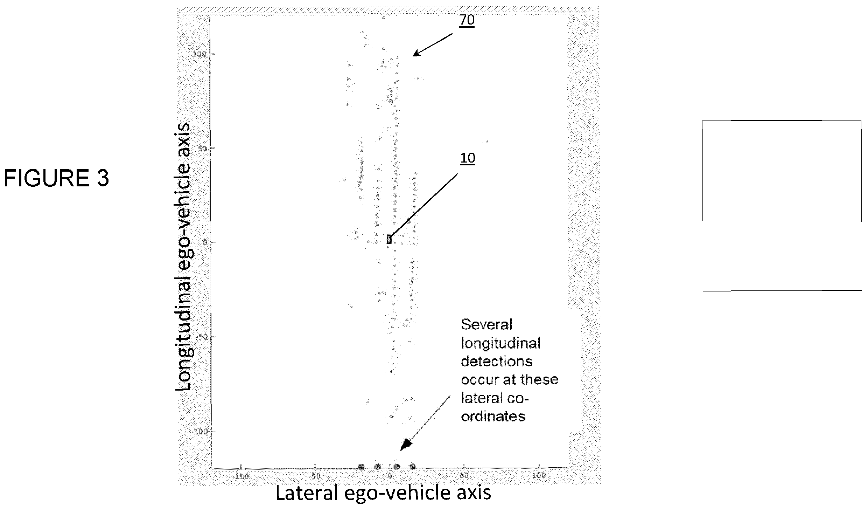

As shown in Fig. 1A, ego vehicle 10 also has a suitable receiver/transmitter 34 which may be connected to external network(s) 2 vi a wireless data connection or link. In some examples, communication with the ego vehicle is bi-directional along a wireless link, i.e. the same type of wireless channel is used to upload data from the ego vehicle may be also used, for example, to download map data from a remote source, but in some examples, a different type of wireless connection is used. The same type of wireless connection channel (i.e. wireless link) or some other wireless link may be used to communicate with other vehicles 40 (see those in Figures 2 and 3) in the vicinity of the vehicle 10 or with local infrastructure elements. Examples of wireless connections include connections provided using cellular communication technologies may be used for long range communication such as to external networks and if the cellular communication technology used have low latency it may also be used for communication between vehicles, vehicle to vehicle (V2V), and/or vehicle to infrastructure, V2X. Examples of cellular radio technologies are GSM, GPRS, EDGE, LTE, 5G, 5G NR, and so on, also including future cellular solutions. However, in some solutions mid to short range communication technologies are used such as Wireless Local Area (LAN), e.g. IEEE 802.11 based solutions. ETSI is working on cellular standards for vehicle communication and for instance 5G is considered as a suitable solution due to the low latency and efficient handling of high bandwidths and communication channels.

In some embodiments, the pre-processing component 24 determines co-ordinates which represent the position of sensed detections of stationary and non-stationary objects from a surrounding environment of the vehicle 10 in a suitable reference system. The position of the sensed detections of objects may be given using coordinates in a reference frame based on to the vehicle itself (for example, provided in the ego-vehicle's frame of reference) or in a "global" coordinate system depending on specifications.

A preferred example, determines the position measurements of sensed detections using a Cartesian co-ordinate frame of reference relative to the ego-vehicle. This allows the lateral positions of the sensed detections to be given by, for example, their distance along a lateral axis from the ego-vehicle and the longitudinal positions of the sensed detections are then given by their distance in an orthogonal direction, i.e. along the longitudinal axis of the ego vehicle.

The use of a frame of reference which is based on the ego-vehicle advantageously simplifies the geometry as it is easier to determine when sensed detections share the same lateral or longitudinal position relative to the ego vehicle. The longitudinal distance positions of the sensed detections can be used to determine regularity criteria by calculating differences in distance of the sensed detections at selected lateral positions. For example, if the sensed detections are grouped based on their lateral positions, then in one embodiment, one or more groups with the highest number of sensed detections then perform a sorting operation on the group members to sort the group according to their positions in the longitudinal direction. This allows the differences between longitudinal positions to be determined. If the determined longitudinal differences are nearly all the same for a particular lateral group (i.e. if the sensed detections at a particular lateral distance from the ego-vehicle turn out to be evenly spaced apart in the longitudinal direction), this indicates a regularity to the longitudinal positions of the sensed detections at that lateral distance from the ego vehicle.

Embodiments of the invention associate certain groups of sensed detections which sharing the same lateral distance (within a tolerance level) from the ego vehicle and which have such a regularity in their longitudinal direction (within another tolerance level) as being sensed detections of a large (as in longer than the longitudinal sensor range forwards and backwards of the ego-vehicle) elongate object at that lateral distance. Examples of possible objects which large enough to extends over all or of a significant distance within the sensor detection range of the ego-vehicle include, for example, a guard rail.

In some embodiments, a difference regularity criteria for a lateral grouping of sensed detections which comprises at least a criterion that the differences in distance of the sensed detections in each selected lateral group in the longitudinal direction relative to the ego vehicle are below a predetermined threshold. For example, all the differences may be binned, and the peaks can checked also against known characteristics of barriers for the road segment where the ego vehicle is located to qualify as a check that the peaks in the difference regularity do correspond to a barrier and not to another object.

Some embodiments of the pre-processing component 24 of the perception system 14 are configured to perform a method of stationary object detection by detecting one or more types of stationary sensed objects based on attributes of features of the particular type of object causing characteristics in a group of sensed detections of that type of object.

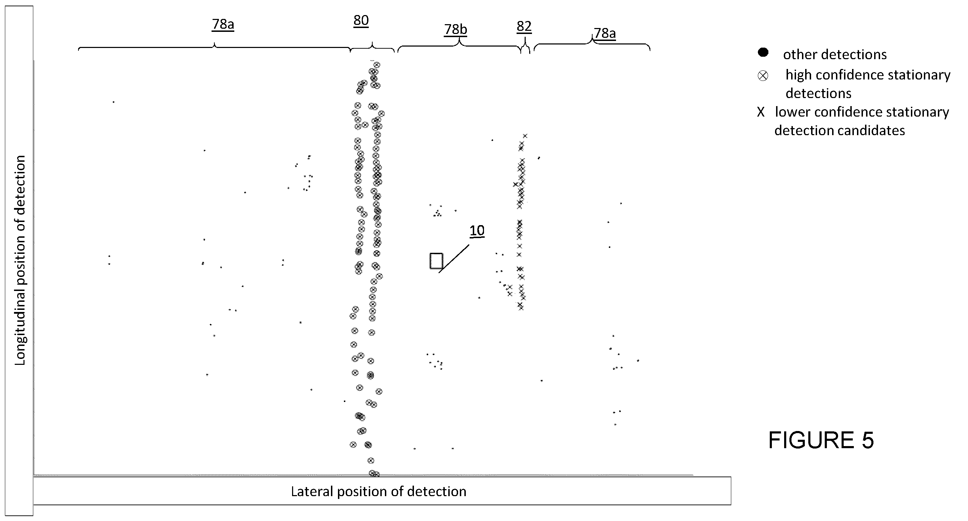

Some embodiments of a method of detecting a stationary object, analyse a group of sensed detections, such as radar detections from within the environment 32 of the ego-vehicle 10. This enables a larger sample set of candidate stationary object detections to be analysed at any given time than would be the case if only the forwards facing detection zone was utilised. By looking at the sensed detections of the environment of the ego vehicle, certain types of objects, which have a structure large enough to be detected over a range of positions within the environment can be determined. In particular, elongate structures such as barriers or guard rails which run alongside the road or lane the ego-vehicle will be sensed multiple times at multiple different positions within the 360 degree environment 32. This allows more sensed detections to be used and for if the ego-vehicle is travelling along or was travelling along a relatively straight path parallel to the structure being sensed will result in parallel tracks such as those seen in Figures 3 and 5 being seen in the sensed detections at particular lateral positions relative to the ego vehicle.

The large number of sensed detections at any given point of time resulting from a large structure being sensed in the environment of the ego vehicle can be used to quickly identify such sensed detections and remove them from the set of sensed detections of the environment, providing it is possible to quickly recognise what attributes will result in the sensed environment from such a large structure. In other words, embodiments of a method of stationary object detection disclosed herein analyse the sensed stationary object detections from an environment around the vehicle to determined shared characteristics of a group or set of sensed stationary objects. In the case where the structure is a guard rail or barrier running parallel to the path of the ego-vehicle 10, one shared characteristic by the set of sensed stationary objects of that guard-rail or barrier will be a shared lateral distance from the path of the ego-vehicle.

In some embodiments, vehicle data which provides geographical position (latitude, longitude), a heading of the vehicle (yaw angle) and a speed of the vehicle is also received by the pre-processing component 24 is used to determine the yaw of the vehicle and/or road curvature. The vehicle data may be received from a localization system 22 of the vehicle 10 such as that shown in Figure 1 (e.g. a Global Navigation Satellite System, GNSS), and/or an inertial measurement unit 20 (IMU) (for example, such as that shown in Figure 1) and in some embodiments may also include map data.

Some of the received sensor data comprises sensor detections which indicate positions of at least one stationary object detected within one or more of the detection zones 32a,b,c,d which surround the environment of the vehicle 10. Stationary objects could include, a road reference may for example be a lane marking, a traffic sign, a road edge, a road barrier, or any other suitable landmark. The position of the one or more stationary objects is determined in reference to a local coordinate system of the vehicle in some embodiments but it may also be determined instead or in addition by reference to a global coordinate system, depending on application and implementation choices.

In some example embodiments, the amount of raw sensor data acquired from sensors 16, 18 which is converted into sensor detections is reduced by the pre-processing component 24 before any additional analysis is performed by the main processing component 28 which provides, for example, scene understanding of the ego-vehicles environment. In some examples, the data stream comprising the raw sensor data is reduced by removing stationary sensed detections comprising sensed detections from one or more different types of sensors such as, for example, radar sensors, LIDAR sensors, ultrasonic sensors, etc., using a method of detecting a stationary object is a particularly type of predetermined object as claimed herein.

Fig. 1B of the accompanying drawings shows various components of the platform which implements the perception system 14 according to some example embodiments. As shown in Fig. 1B, the perception system 14 is implemented using one or more processors 40 (for example, a general processing unit and/or one or more other processing units), a memory component 42, a sensor interface component 44 and a data communication interface component 46. The processor(s) 40 can be implemented in hardware and/or software, and may in some embodiments be referred to as a control circuit 40 or control circuitry 40. The processors 40 are configured to execute instructions stored in the memory to perform one or more methods according to the method embodiments disclosed later herein below. In some embodiments, one or more of the components may be implemented at least as part of a distributed computer system instead of being wholly implemented on the ego-vehicle. Whilst the currently preferred implementation of the barrier-detection algorithm by the examples of the methods disclosed herein comprises executing the algorithm wholly on the ego-vehicle, should communication speeds and connection reliability improve sufficiently in future it may be possible for some or all of the steps performed to be implemented in a more distributed manner. Other applications used by the ego-vehicle perception system which are currently capable of being implemented on the ego-vehicle or in a distributed manner include, for example map handling.

The memory 42 used by the processor(s) 40 comprises one or more (non-transitory) computer-readable storage mediums, for storing computer-executable instructions, which, when executed by the one or more computer processors of the processing unit 28.

In some embodiments of the perception system 14, the memory 42 used by the processor(s) 40 comprises one or more (non-transitory) computer-readable storage mediums which are also used by processor(s) 40 implementing the pre-processing unit 26, for example, for storing computer-executable instructions, which, when executed by the one or more computer processors of the pre-processing unit 26, cause the data pre-processing unit 26 to perform the techniques such as an example embodiment of a method of stationary object detection described herein below. In some embodiments, however, different memory and/or processors are used by the pre-processing system 26 either instead of or in addition to the memory and processors used by the main processing system 28.

Examples of suitable forms of the memory 42 include high-speed random access memory, such as DRAM, SRAM, DDR RAM, or other random access solid-state memory devices. Other examples of memory 42 include non-volatile memory, such as one or more magnetic disk storage devices, optical disk storage devices, flash memory devices, or other non-volatile solid-state storage devices.

In some embodiments, the processor(s) 40 of the perception system 14 are configured to receive vehicle data using the data communication interface(s) 46 such as the data from the IMU 20 and/or the localisation component 22, and receives sensor data via the sensor interfaces (44) from, the camera system 18 and also signals from the sensor system 16 via a signal pre-processing component 24.

Turning now to Figs. 2A and 2B, these illustrate schematically example environments where a method of detecting an object of a predetermined type may be implemented according to some of the disclosed embodiments. As mentioned above, whilst positioned along such straight or near straight road segments 50, the ego vehicle 10 will gather a continuous stream of sensor data from its sensor systems 16, 18 such as, for example may comprise sensed detections and one or more attributes of the sensed detections.

Figs. 2A and 2B show substantially straight or near straight road segments 50 respectively within the sensed environment 32 of an ego-vehicle 10 having a control system, for example, as described herein above. Figs. 2A and 2B illustrate collectively an example scenario where misclassification of a non-stationary object (for example, a queue of vehicles 70a,b,c,d, etc. such as Fig. 2B shows) as a stationary object (for example, a barrier or guard rail 62 such as Fig. 2A shows) could occur. As previously mentioned, whilst it is important that the removal of certain classifications of detections is capable of being rapidly performed by the pre-processing component 24 shown in Fig. 1A, misclassifying a sensed detection of a stationary object where the object is only temporarily stationary is dangerous, for example, that object may not be tracked correctly afterwards.

Fig. 2A illustrates schematically an example road segment 50 along which an ego vehicle 10, such as the ego vehicle shown in Fig. 1 for example, is travelling in an outer lane 60a in a first direction. As shown in Fig. 2A, the road segment 50 includes other traffic vehicles 52 and 56. As shown in Fig. 2A, vehicle 52 is proceeding in an opposite direction to the direction faced by the ego vehicle along lane 60c. Lane 60c runs substantially parallel to lane 60a with traffic proceeding along lane 60c substantially in the opposite direction to the direction taken by the ego vehicle along lane 60a . Lane 60c is in practice usually separated by a traffic lane divider, which may take the form of an elongate object 54 in some examples, from and inner lane 60b along which traffic 56 proceeds in substantially the same direction as the ego vehicle 10 (which is shown positioned/proceeding along lane 60a. Lane 60b is separated from lane 60a in the example road segment shown in Fig. 2A also by a suitable lane divider, for example, by a barrier or guard rail 58.

In the example road segment shown in Fig. 2A, along the outer edge of outer lane 60a another elongate structure 68 is shown which functions as a lane edge marker for the outer edge of the outer lane 60a. In some embodiments, the elongate structure 68 comprises a barrier or guard rail, and may have a similar structure to the guard rails/barriers 58 and 54 shown in Fig. 2A.

In some example embodiments, local, national, or international regulations may determine the structural features of any edge guard rail 68 or lane dividers 54, 58. Such regulations may differ according to the type of road.

In Fig. 2A, elongate structure 68 comprises rail 62 supported by regularly spaced struts or supports 64a,b,c,d,e. Several repetitive structural elements 64a,b,c,d,e are shown in Fig. 2A as being positioned substantially parallel to the lane segment 60a along which the ego vehicle is travelling Several of the regularly spaced features (such as struts or supports 64a, 64b, 64c, 64d) which support a continuous or near-continuous element 62 are located within the zone of detection 32 of the ego-vehicle in Fig. 2A. In this example, struts 64b,c, and d of the object 68 are each spaced apart from adjacent struts 64a...64e by a regular distance d_{reg} as shown in Fig. 2A.

As shown in the example of Fig. 2A, the near 360 degree zone of detection 32 which surrounds the ego vehicle 10 at any given point of time accordingly includes sensed detections from the stationary features 64a,64b to the rear of the vehicle, 64c to the side of the vehicle and 64d and 64e to the front of the vehicle, as well as sensed detections from non-stationary vehicle 56 to the side of the vehicle. Other sensed detections may include stationary features generated by lane dividers 54, 58.

Fig. 2B illustrates another example of a road segment 50 comprising lanes 60a,60b, 60c where the ego vehicle 10 is now in the inner lane 60b of traffic travelling in a first direction and a stationary queue of traffic comprising stationary vehicles 70a, ... , e are shown in occupying the outer lane 60a. Fig. 2B illustrates schematically how the ego vehicle may classify in error sensed detections of the temporarily stationary vehicles 70a,... , b as being sensed detections of a permanent stationary elongate structure such as a barrier or guard rail or the like as the stationary vehicles 70a, ... ,e could present a near continuous sensed detection trace over time similar to that of the elongate structure 62 shown schematically in Fig. 2A.

The detected queue of vehicles 70a..70e will also generate a large number of sensed stationary detections, also referred to herein as pseudo stationary detections. For example, large number of detections may be sensed for both the queue features and the barrier type structures at a similar lateral positions in each processing cycle. Accordingly, it is advantageous if the sensed signals from sensors 16 can be pre-processed by the pre-processing component 24 sufficiently reliably and rapidly to distinguish truly stationary sensed object detections from pseudo stationary sensed object detections. In some embodiments, truly stationary sensed object detections can then be tagged as such or discarded from the sensor stream to reduce the computational burden on the data processing component 28 (e.g. for tracking moving objects). Discarding truly stationary objects does not necessarily mean they are deleted or no longer held in memory 42. In some embodiments, the sensed stationary object detections are used by one or more other sensor processing applications to further analyse the environment of the ego vehicle 10.

In some example embodiments, where the sensor(s) 16 are radar sensors, and the raw data comprises a number of radar signal detections, the signal pre-processing component 24 shown in Fig. 1A is configured to reduce the number of radar sensed detections which are received by the data processing component 28 by performing one of the disclosed method embodiments, providing that any qualifying conditions for the method to be performed are met. Examples of such qualifying conditions include the ego vehicle being first determined to be moving in a straight direction substantially parallel to a straight road segment such as Figs. 2A and 2B show. This type of road and driving provides suitable conditions for the position of the sensed detections to be given in a frame of reference which can be determined relatively quickly relative to both the road geometry and/or the ego vehicle driving position on the road.

Using the method in such conditions allows the volume of data in any stream of sensor detections which is passed on to the main processing component 28 use by the perception system to track moving objects is thus reliably reduced as the method removes barrier or guard rail detections but not the sensed detections of vehicle queues, as the collective structure of the queue as indicated by the sensor detections of the queue will not be as regular in a reference frame based on the longitudinal and lateral axes of the ego-vehicle as the collective structure of the guard rail detections in the same reference frame.

For example, in Fig. 2B, each car may have a different vehicle length or the same vehicle length (in other words, D_vehicle_length_A #D_vehicle_length_B # D_vehicle_length_C # D_vehicle_length_D as shown in Fig. 2B, but it is theoretically possible for D vehicle_length A =D_vehicle_length_B = D_vehicle_length_C = D vehicle_length_D). Similarly, the distance between adjacent vehicles in a queue of vehicles (shown in Figure 2 as d2 #d3 ≠d4 ≠ d5) but of course it is theoretically possible for d2=d3=d4=d5.

As it is extremely unlikely for D_vehicle_length = a constant for all vehicles or for the vehicles in a queue to be regularly spaced apart so that d2=d3=d4=d5 a constant so in nearly all situations the methods disclosed will be able to distinguish sensed detections (such as radar sensed detections of a queue of vehicles 70a,b,c,d,e shown in Fig. 2B) from the sensed detects of a truly stationary structure, such as a guard rail or road-side barrier or the like (shown schematically as regular structure 62 shown in Fig. 2A).

In some embodiments, sensed detections have meta-data attached by the pre-processing component 24 based on their probable classification to reflect a confidence score or indicator for the sensed detection being of a particular type. This allows the processing component 28 to take into account the confidence level of a sensed detection being of a certain type when processing the received data.

In some embodiments, the processors 40 (for example, as shown in Fig. 1B) are configured at least in part in circuitry to implement one or more or all of the steps forming a method according to the disclosed technology for determining stationary sensed detections. In some embodiments, one or some or all of the steps forming the method are provided by executable instructions which are included in a non-transitory computer-readable storage medium or other computer program product configured for execution by the one or more processors 40.

Fig. 3 shows an example of a plot in which a number of sensed detections 70 such as are generated using the raw data from an array of radar sensors 16 are plotted in Cartesian coordinates relative to the ego vehicle 10 which is also shown as a point of reference. As would be apparent to anyone or ordinary skill in the art, however, other co-ordinate systems could also be used and may be centred on other points of reference than the ego vehicle 10. In Fig. 3, the plot positions are indicated with the longitudinal distance from the vehicle 10 along one axis and the lateral distance from the vehicle 10 along the other axis. Fig. 3 clearly shows a large number of sensed detections are aligned in a direction substantially parallel to the longitudinal direction of the path being followed by the ego vehicle 10, such as may occur when the ego vehicle is travelling along a substantially straight road segment substantially parallel to which are various barriers (this is annotated in this example plot by referring to a high number of detection counts sharing the same lateral positions from the ego-vehicle).

Fig. 3 shows sensed detections detected at a snap-shot in time by the ego vehicle and include reflections sensed in the rear detection zone 32c and the front detection zone 32a as well as to the side of the vehicle (e.g. within side detection zones 32b, c). Fig. 3 shows that along certain straight road segments, it is possible to determine groups of stationary sensed detections which share the same lateral position from the ego vehicle 10. For example, as shown in Fig. 3, at least four clusters of sensed detections appear where, within each cluster or group, sensed detections share the same "y" values from the ego vehicle 10. This, assuming that the road geometry is substantially straight within detection zone 32, provides a strong indication that some detections may be stationary barrier signals which could be discarded by the pre-processing unit 24 to reduce the volume of sensed detections that sent by the pre-processing unit 26 to the main processing unit 28 of the perception system 14.

Road barriers can cause problems for the vehicle tracking system as false tracks can be created as a result of the barrier sensed detections, barrier detections can be associated with real tracks (including, for example, tracks of other vehicles which are only temporarily stationary), and as the large number of barrier detections causes unnecessary load on the processors of the tracking system.

Embodiments of the disclosed technology accordingly seek to identity sensed detections, for example, radar detections, and where the sensed detections can be identified as barrier detections with a high enough confidence level, remove the barrier detections in a pre-processing step.

Some embodiments of the disclosed technology are particularly suited to being implemented by an ego vehicle which is travelling along a straight or relatively straight road segment. For example, a relatively straight or substantially straight road segment is road segment along which any lateral curvature of the road does not unduly increase the computational burden of determining the lateral location of the stationary detections relative to the longitudinal axis of the ego vehicle and/or relative to a longitudinal axis of a path along the ego vehicle is travelling. Although the term "road segment" is used herein, the methods disclosed can be applied to any off-road scenario where a vehicle may follow a similar substantially straight path. For example, in a car park or the like.

Whilst the ego vehicle 10 is being driven in a straight direction, barriers or guard rails or other similar elongate structures 62 which are substantially parallel to the path the ego vehicle is following within the ego vehicles zone of detection will have similar lateral positions from the ego vehicle in the detection zone 32. These parallel tracks of detections should be detectable if the sensed detections are grouped based on their lateral distance from the ego vehicle, as the highest peaks should indicated a structure having a consistent lateral distance from the ego vehicle, such as would represented by barrier detections.

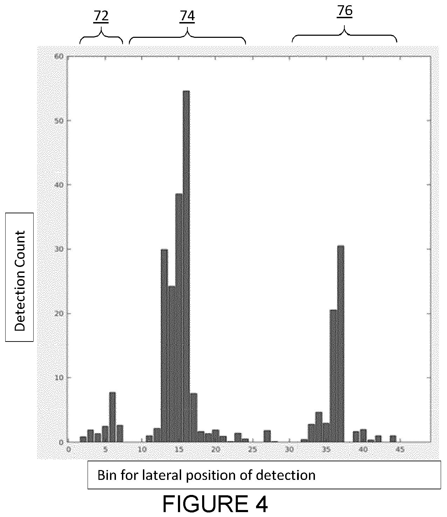

In order to determine which lateral grouping of sensed detections is likely to contain sensed detections of an object which extends in longitude through-out the sensed environment around the ego-vehicle, the sense detection groups are ordered relative to the lateral range they cover from ego-vehicle 10. An example of laterally ordering groupings of sensed detections is shown in Fig. 4. In the illustrated example, there are clearly three peaks shown in the histogram in Fig. 4. The left peak 72 in the plot illustrated in Fig. 4 has a low count of sensed detections (<10). The central peak 74 in the cluster of three peaks has the highest count (> 50) and the right peak 746has a count between the lowest peak 72 and the maximum peak 74, shown here at approximately 30 counts. The numbers in horizontal axis on the plot are indicative of distance from the ego-vehicle only in the sense that they represent the bin numbers into which sensed detections have been grouped for generating the histogram. In this Figure, the lateral position 0 (i.e. the position of the ego-vehicle) is in the centre of the plot and represented by the bin numbered 25.

In some embodiments, it is possible to remove sensed detections based on their lateral position alone. For example, in some embodiments, lateral margins are removed so that sensed detections which are too far or too close to the ego vehicle are removed. Typical margin positions are selected on the basis that dropping detections above the far lateral margin from the ego-vehicle will processing resources as fewer bins need to be processed. The removal of positions from the inner margin reduces a risk of misclassification of stationary detections which are directly in the ego vehicle's lane (i.e. not adjacent). An example near margins of 2.5m may be used in some embodiments so that sensed detections within this range are discarded. An example far margin of around 40m may be used in some embodiments so that sensed detection beyond the far margin of around 40m are also discarded/ignored. For example, in a preferred embodiment, the near margin is 1m and the far margin 25m. Within the lateral cut-off margin(s), in the example shown in Fig. 4, several peaks can be determined. If the histogram bin (i.e. the group) with the highest peak of sensed detections comprises only detections from a barrier 62, by removing the sensed detections 74 from that group from the sensed detections that are streamed to the main processing component 28 of the perception system the computational burden on the main processing component 28 can be reduced. Alternatively, they can retained in the stream but forwarded with additional meta-data, for example, meta-data may be appended to a sensed detection in the form of a tag or label which indicates it is a "barrier type" or "candidate for being a barrier type".

In some examples, perception system 14 first receives sensed detections from one or more sensors 16 which are then split into sensed detections which are determined to be detections of non-stationary (i.e. moving) objects and stationary objects (also referred to herein as stationary object detections or just stationary detections 70). Next, in some embodiments, vehicle data and/or mapping data is used to first qualify the road geometry and vehicle yaw meet certain conditions before performing a method of stationary object detection according to the embodiments disclosed herein. For example, a check may be performed the straightness of road segment 50 (and/or lane 60) is sufficient and that the driving of the ego vehicle 10 is not generating too much yaw, before the other steps in the method are performed. In other words, a check is made that one or more conditions are met before the method of detecting an object of a pre-determined type is performed such as, for example, straight road, straight driving (or substantially straight road, straight driving). Providing conditions are suitable, pre-processing component 26 performs a method of classifying sensed detections according to one of the embodiments disclosed herein.

If the conditions are met, then stationary detections 70 having similar lateral positions relative to the longitudinal axis of the ego vehicle are allocated into groups. These lateral groupings of stationary detections 70 are sorted according to the group lateral position range covered relative to the position of the ego vehicle 10. Each group may be associated with a range of lateral positions which may be predetermined range(s) or dynamically determined range(s), for example, based on the overall range of the ego-vehicles sensing capabilities.

Next, which group (as shown in Fig.4 , group 74) includes the largest number of stationary sensed detections is determined. This may be determined as an absolute number in some examples, or as a relative peak over neighbouring groups in other examples (e.g. by determining each groups crest factor). Once the criteria for selecting a lateral group have been met, the stationary sensed detections in that group (e.g. in group 74) are considered as a group to represent collectively at least part an elongate structure running substantially to the substantially straight path being followed by the ego vehicle 10 along that road segment 50 within the sensed environment 32 of the ego vehicle. Such an elongate structure 62 may, for example, be a barrier or guard rail running parallel to the road. Some embodiments require the crest factor of a group to be above a threshold so that there is more confidence that the group of stationary detections sensed within the lateral range of that group relate to a structure such as a barrier or guard rail.

Whilst the above embodiments can allow barrier rails to be detected in a rapid manner based on the relative number of sensed stationary detections at a particular lateral distance from the ego vehicle compared to the total number of sensed detections at other lateral distances, this may not be a sufficiently reliable indicator in all traffic conditions.

Some embodiments of the above method are not as effective in reducing the number of barrier detections reliably if there is dense traffic which is temporarily stationary in one or more lanes adjacent to the lane along which the ego is travelling such as Fig. 2B showed schematically. Very dense traffic areas can cause problems such as boxing in the ego vehicle and also problems such as other vehicles lining up vertically when queuing and stationary. This results in pseudo stationary sensed detections causing strong histogram bins which is a problem as this can result in the sensed detections of the temporarily stationary vehicles being misclassified as sensed barrier detections.

One way of addressing this is, in some embodiments, to modify the lateral range of each group relative to the ego vehicle 10. However, whilst a wider width allows a peak to be determined with more sensed detections, it also increases the risk of catching non-barrier detections. One the other hand, smaller lateral ranges for each group of sensed detections provide more accurate identification of sensed detections as being from a barrier, but if the barrier is not completely parallel to the straight(ish) path taken by the ego vehicle or to the ego vehicle's orientation, then the risk of sensed detections being allocated to different groups (which would flatten out the peak group) is higher.

In some embodiments, the lateral range of positions relative to the longitudinal axis of the ego vehicle is not predetermined but is instead determined from the overall lateral range of the sensed detections and the number of groups which are associated with sub-ranges of the lateral range. These groups correspond to the bins in the histogram, and a typical lateral range for each group is approximately 1.5 meters with 50 groups being used, although this can change from frame to frame (as the sensed detections form a stream of data over time).

In some embodiments, a longitudinal limit may be imposed to avoid the risk of incorrectly classifying a sensed detection on the road as a barrier at longer distances. An example of a longitudinal limit is 50 meters from the ego vehicle. In a preferred embodiment, for example, a preferred number of bins is 48 with a width of 1m and typically the longitudinal limits will be 100m in each direction.

In some embodiments, a group of detections as represented, for example, by a bin in the histogram depicted in Fig. 4, must meet one or more lateral position selection conditions for the sensed detections in that group to be classified as belonging to an elongate structure such as a barrier or guard rail. Such lateral position selection conditions include, for example, first and second barrier detection conditions in some embodiments.

Accordingly, in some embodiments, the first lateral selection condition relates to a count of sensed detections forming a lateral group having a peak over the average count of sensed detections or at least a peak over the sensed detections of one or more groups forming neighbouring lateral ranges (i.e. over the adjacent bins of the histogram as shown in the example histogram of Fig. 4) exceeding a peak selection threshold. In some embodiments, the peak over averages is also referred to as a crest factor. In the example of Fig. 4, this crest factor or peak over average threshold is 1.5.

In some embodiments, the second lateral selection detection condition relates to the number of sensed detections in a group (i.e. within any given bin of the example histogram of Fig. 4) also exceeding a count selection threshold. For example, a count selection threshold of 10 may be used in some embodiments.

Some embodiments of the invention impose pre-conditions before the method is performed. In some embodiments, the pre-conditions include:
a minimum stationary detection confidence condition that a sensed detection is a sensed detection of a stationary object (also referred to herein as a stationary sensed detection); and/or
a maximum yaw rate threshold condition so that an embodiment of a method of determining stationary objects as disclosed herein is not implemented if the yaw rate exceeds a threshold to avoid issues if the road segment curves.

Some embodiments adjust the lateral positions of sensed detections to take into account vehicle yaw which allows narrower lateral ranges for each group.

Some embodiments distinguish between the left and right lateral sides of the ego vehicle when determining lateral groups, as there may be big differences in the crest factor.

Some embodiments may not take into account sensed detections located behind the ego-vehicle in the count of the sensed detections of a group covering a lateral position range, however, by taking into account these sensed detections, more confidence can be obtained that the object is a very large longitudinal object such as a barrier or guard rail.

Some embodiments implement the method of classifying stationary sensed detections in the pre-processor 26 rather than the main processor, however, this is not necessary in all embodiments. By performing the processing in a pre-processing stage, however, the method may avoid impacting the resources required for road estimation processes performed by the main processing component 28.

The embodiments of a method of classifying sensed detections disclosed herein implements an algorithm which, reliably and in a computationally efficient manner that seeks to conserve processing resources, addresses one or more technical problems which can occur when classifying detections of certain types of stationary objects such as barriers and guard rails (which can form a large proportion of the detections which need to be processed by the perception system). For example, a large number of sensed detections can be generated by a guard rail running parallel to a road and this can cause false tracks to be created on the guard rails, detections of the guard rail to be incorrectly associated with existing vehicle tracks, and overloading of the vehicle control systems CPU.

By being able to identity the radar detections that belong to guard rails the tracking and sensor fusion algorithms can perform more efficiently and other algorithms such as road estimation algorithms may also benefit.

In some embodiments, the method of classifying sensed detections is performed only if the following pre-conditions are fulfilled:
the curvature of the road is below a threshold (which can be determined using map data in some embodiments); and
the ego vehicle does not turn significantly as it travels along the road, which could, for example, occur if the ego-vehicle is overtaking (this can be determined by the ego motion data and during this time the execution of the algorithm which implements an embodiment of a method of classifying stationary objects is disabled).

In some embodiments, the ego vehicle is stationary when the algorithm which implements an embodiment of a method of classifying stationary objects is executed.

Some embodiments of a method of classifying stationary sensed detections will now be described in which the above method embodiments are performed and in addition, a second grouping of stationary sensed detections is performed based on longitudinal position attributes of the sensed detections.

In addition to the first and second lateral position barrier conditions which comprise a lateral condition such as that described above and an additional conditions, embodiments of the invention will now be described which selection of a group is additionally based on the regularity of the positions of stationary detections in that group in a longitudinal direction from the ego vehicle. This regularity results from the structural regularity of the stationary object itself, for example, from the support structure for a guard rail comprising struts which are spaced at regular intervals along the guard rail.

In the description below, some embodiments of this method are disclosed which refer to classifying stationary sensed detections as barrier or guard rail detections, however, it will be apparent to anyone or ordinary skill in the art, that the method may be used to classify other types of elongate stationary objects which extend in a direction parallel to the longitudinal direction an ego vehicle is facing which exhibit similar structural characteristics to those of barrier or guard rails.

The description of the various embodiments described above is not repeated here for the sake of brevity as the method steps may be also used in embodiments where in addition to first grouping of stationary detections based on their lateral position from an ego vehicle and selecting one or more groups where the first and second lateral selection criteria are met, further analysis is performed of the selected groups to before classifying the groups as groups of stationary detections from a large elongate structure such as a guard rail.

In some examples, similar to the embodiments described above where a histogram was used to represent the count of stationary sensed detections at various lateral distances from the ego vehicle 10 in a histogram bin (or group), peaks, peaks over average etc. can be assessed to determine if they meet one or more lateral position selection criteria. However, now, if the lateral selection conditions are met, that group is regarded only as a candidate group of stationary detections.

As other stationary objects could also give a strong peak in the first histogram, for example, in some situations a queue of vehicles may do this as mentioned above, in some examples, a second set of longitudinal groups are generated, one for each guard rail candidate group, which are based on the differences in the longitudinal positions of sequentially distanced stationary detections of each candidate group. No timestamp information is needed in some embodiments as the perception system ticks in iterations, where, in each processing cycle iteration, new detections are processed that are from approximately the same time. The detections belonging to one strong bin in the lateral histogram are then sorted on longitudinal position and the differences determined between longitudinal positions. For example, using the longitudinal (x-positions) of each stationary detection is x0, x1, x2, x3, x4, then if x1-x0 =dreg (for example, as shown in Fig. 2A), and x2-x1 = dreg and x3-x3 =dreg, and x4-x3=dreg, then the regularity of each of the stationary detections is perfect. In practice, some or all of the differences in longitudinal position of the sequential pairs of stationary detections may differ by a small amount Δd, but providing Δd is sufficiently small, i.e. providing the spacing between successive stationary detections is sufficiently regular, this provides an additional degree of confidence that those stationary detections are stationary detections of a large elongate structure such as a barrier or guard rail. In other words, the algorithm determines difference d0=x1-x0, difference d2 =x2-x1, etc., where x0, x1, x2 are increasing longitudinal distances from the ego vehicle and groups the differences so that a histogram of all differences d found for a particular lateral group can be created. The differences d which have the highest number of group members (the peaks in the histogram) can also be compared with information indicating expected "d" for barrier or guard rail structural features might be found based on the ego-vehicles map position and/or the road type.

In some example embodiments, the method creates the second groupings also in the form of a second histogram which is created over the differences in longitudinal position. This as mentioned above, allows more confidence that a structure such as a guard rail or the like which has a very regular construction with metal parts at fixed distances will be distinguishable from a queue of vehicles which will not normally exhibit the same degree of regularity longitudinally even if the laterally positions is fairly consistent.

Thus methods according to these example embodiments enable detection of a group of sensed detections which represent a true guard rail (or any other elongate structure which has a similar structural regularity which the radar sensors can detect) to be determined more reliably by analysing the peaks in the longitudinal direction. If these longitudinal direction regularity count of sensed detections forms a peak in the histogram which meet one or more selection criteria, for example, if the count of regular sensed detections belonging to a lateral grouping or bin forms a histogram peak which is high enough, they indicate sensed detections of a uniformly or regularly spaced object which has a fairly consistent lateral position from the ego vehicle, and as such can be classified more confidently as guard rails compared to methods which just considers the lateral groupings of sensed detections along.

Some of the example embodiments which will be described classify stationary detections based on a confidence score. In some embodiments of a method of classifying stationary objects, for example, as road-side or lane-side guard rails or barriers, the coordinate system uses the ego-vehicle origo at the centre of ego vehicle rear axis. For example, Y-axis label values may refer to longitudinal positions relative to the ego vehicle origo and X-axis label values refer to is lateral positions from the ego vehicle origo. However, a different frame of reference and/or co-ordinate system may be used instead to describe some of the disclosed embodiments.

For example, as shown in in the example of Fig. 5, a plot of detections may be provided where longitudinal positon is relative to the position of the ego-vehicle along the direction of the longitudinal axis of the ego-vehicle 10 and lateral position comprises lateral position relative to the longitudinal axis of the ego-vehicle 10. As shown in the example plot of Fig. 5, a number of stationary detections 70 were found within the detection zone 32 of the ego-vehicle at a certain point in time. Stationary detections 78 which are discarded either as they are too far or too close laterally from the vehicle to be detections of a guard rail or barrier according to the technology disclosed herein are not processed by the algorithm, they are not necessarily deleted from memory 42 as they may be processed by other parts of the perception system 14. Stationary detections 80 however have a high chance of being a detection of a barrier or guard rail type structure whereas stationary detections 82 were determined to be stationary detections of a barrier or guard rail type structure with a lower level of confidence.

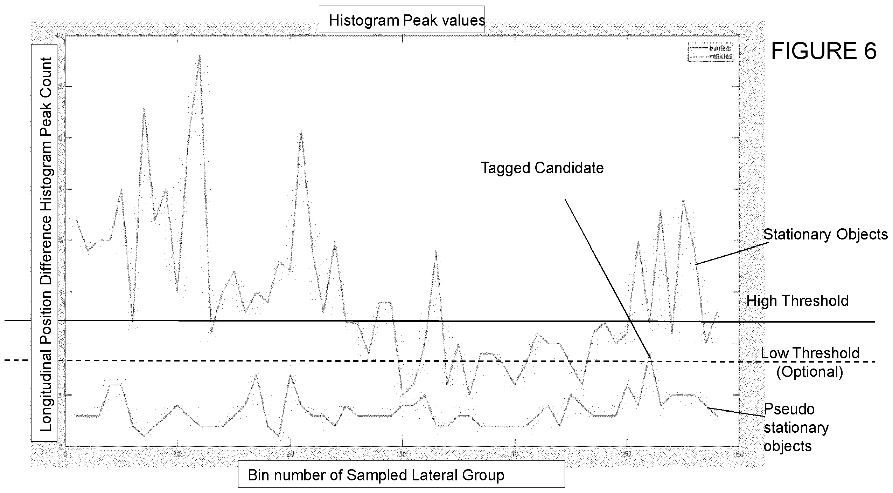

The two level classification of stationary detections such as is shown in the example plot of Fig. 5 which was generated according to a double-histogram (in which sensed detections of stationary objects were first grouped laterally and then classified only if each group contained sufficiently regular longitudinal distances between longitudinally adjacent sensed detections. In the example shown in Fig. 5, two different thresholds for peaks in the longitudinal grouping of distances between detections at a given lateral distance (as shown schematically in Fig. 6) provide two levels of confidence scoring that a group corresponded to a stationary object). The process of applying a confidence score is described in more detail later below.

Fig. 6 illustrates an example of how in some embodiments the disclosed methods identify a sensed detection depending on a confidence score a sensed detection is of a particular type of stationary object. In Fig. 6, the vertical axis represents the peaks of each longitudinal grouping of distances between detections in a bin covering a particular lateral range of detection positions from the ego vehicle and the horizontal axis represents the bin number of the bin which covers a particular lateral range. Each bin which covers a particular lateral range may include samples of detections of both stationary objects (such as barriers) and pseudo-stationary object detections (such as queues of vehicles). In Fig. 6, both a high and a lower threshold (which is optional) are illustrated. Objects belonging to bins which have peaks above the higher threshold are considered stationary objects. Objects between the two thresholds are, in some embodiments, optionally tagged as candidate stationary objects. This allows more information to be retained about objects for which there is not enough confidence to classify them as stationary objects (which would normally remove them in subsequent analysis such as object tracking) but for which it may be useful for subsequent analysis to retain the information that they may be stationary objects as the subsequent analysis may increases the confidence score that they are stationary objects.

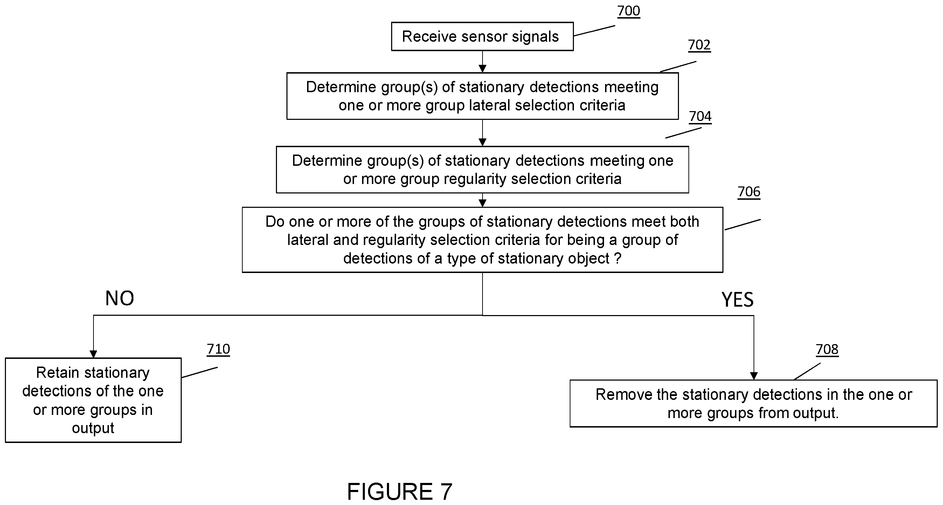

Turning now to Fig. 7, this shows an example embodiment of a method of classifying sensed stationary detections to identify if the sensed detections are of a pre-determined type of stationary object. The selection criteria are imposed sequentially, and either lateral then regularity or regularity then lateral grouping may be performed in different embodiments to determine if sensed detections are of, for example, an elongate object which extends in a direction substantially parallel to the longitudinal direction the ego vehicle is facing, of which examples include road-side or lane-side barriers or guard rails. The sensed detections may be generated from sensors facing behind, to the side, and the front of the ego-vehicle in preferred embodiments to ensure the maximum number of sensed detections per sensing cycle.

In Figure 7, the method comprises receiving (step 700) sensor signals such as those which a radar sensor system of an ego vehicle generates. Sensed detections can be grouped according to their lateral positions from the ego vehicle 10, for example, as described above referring to Fig. 4. The groups of sensed detections are then sorted according to each group's range of lateral positions from the ego vehicle, for example, as described above. The groups of stationary detections which meet one or more lateral group selection criteria are then determined (step 702) as candidate object (e.g. guard rail) groups. Sensed detections can be also grouped according to the regularity of the spacings in the longitudinal position from the ego vehicle 10 and the groups of sensed detections can then be sorted according to each group's range of regularity of the spacing between longitudinal positions from the ego vehicle, with groups which meet one or more group regularity selection criteria being determined (step 704) also as candidate object groups (for example, guard rail groups).

The stationary detections which belong to groups which meet both the lateral and the longitudinal regularity selection criteria for a candidate object group can then be classified as a sensed detection of a predetermined type of object associated with the lateral position and longitudinal regularity selection criteria (step 706), in other words, if a group of stationary detections which share the same lateral position from the ego-vehicle at a range of longitudinal positions are also separated from each other by a regular spacing in the longitudinal direction relative to the ego vehicle 10, there is a strong likelihood they are sensed detections of an elongate structure with a regular structural feature such as a guard rail running parallel to the path the ego-vehicle is taking as mentioned above.

Accordingly, based on the determination that a group of stationary detections meets both selection criteria, the group as a whole is classified as a guard rail group of stationary detections and those stationary detections are removed in the embodiment shown in Fig. 7 (in step 708) from the output of the pre-processor component 26. If none of the groups meets both selection criteria, then the stationary detections can be retained in the output (step 710). In some embodiments, it may be possible to repeat steps 700 to 706 with one or more adapted selection criteria (this is not shown in Fig. 7).

In the example embodiments of the method shown in Fig. 7, stationary sensed detections are first laterally grouped and then the lateral groups of stationary detections are analysed for meeting longitudinal regularity in the spacings between the sensed detections. However, in other embodiments, it is possible for sensed detections to be analysed first to locate groups formed by sensed detections which meet selection criteria based on their longitudinal positions relative to the ego vehicle meeting one or more regularity of spacing criteria, and then for these groups of regularly spaced sensed detections to be regrouped based on the lateral positions relative to the ego vehicle.

Embodiments in which lateral positions are determined first however, may advantageously allow more rapid reduction in the number of the sensed positions which need to be analysed for the regularity of spacings in their longitudinal positions as stationary detections located outside the inner and outer lateral margins can be discarded. In some embodiments, longitudinal margins are also imposed to quickly discard stationary detections which are associated with positions located too far longitudinally from the ego-vehicle, for example, outside of +/- 100m.

An example of an embodiment of a method of stationary object classification where the lateral positions are first grouped before the longitudinal spacings comprises determining one or more groups of stationary detections which meet the lateral selection criteria and the group regularity selection criteria for being a group of stationary detections corresponding to at least one stationary object by determining at least one lateral group of stationary detections which meet one or more lateral position selection criteria based on the lateral position of each group comprising stationary detections from the direction faced by the ego-vehicle and then the determining, for each at least one lateral group of stationary detections, if that lateral group meets the or more group regularity selection criteria, and if so, determining the stationary detections in that lateral group correspond to at least one stationary object by classifying the stationary detections in that lateral group as being stationary detections of that particular type of stationary object. Further steps, such as applying a confidence score and/or filtering out certain groups of sensed detections on the basis that they do not need to be tracked as they represent stationary objects may be implemented in some embodiments.

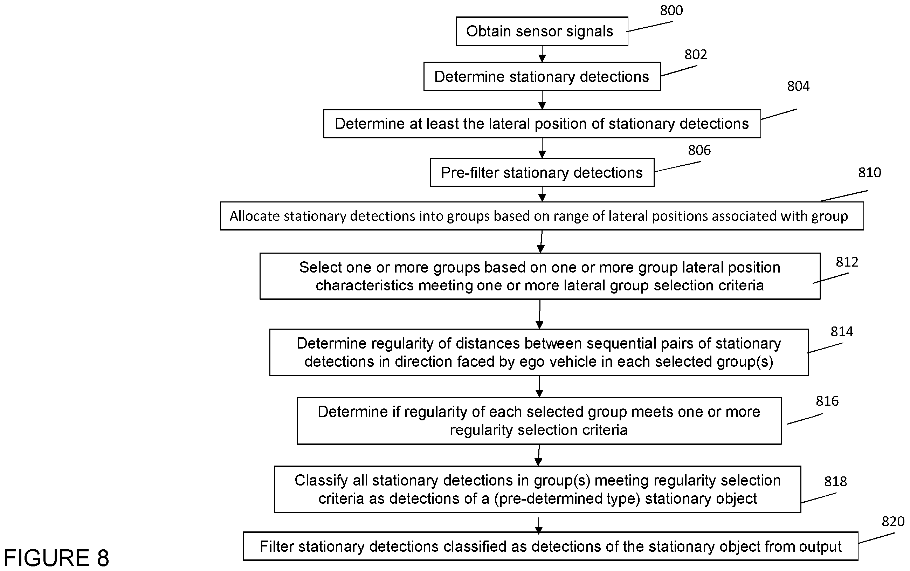

An example embodiment of such a method of stationary object detection or classification is shown in Fig. 8 where, first, raw sensor data is collected from sensors, for example, by obtaining radar signals from radar sensors (step 800). Radar sensors 16 may comprise a series of arrays of sensor arrays which collectively provide 360 degree coverage around the ego vehicle in some embodiments or may be provided by an omnidirectional radar array in other embodiments. This allows information nearly all the way or all the way around the ego-vehicle's surroundings to be obtained. In each iteration, the latest received detections are used from each sensor to cover for the 360 degree detection zone around the ego vehicle (in some embodiments, this may be a near 360 degree zone of detection instead).

Stationary (or candidate stationary) detections in the sensor data are then determined in step (802). In some embodiments, the stationary radar detections and non-stationary radar detections are distinguished by compensating the range rate with ego motion speed and the lateral and the longitudinal position of each stationary detection relative to the ego vehicle is determined (step 804). In some example embodiments, the method also comprises a pre-filter step 806 in which sensed detections with a lateral position (which may be represented in Cartesian ego-vehicle co-ordinates, for example, by an abs(X) value which represents a lateral position from the origo larger than a threshold (e.g. 40 m) are removed from the set of stationary sensed detections as these represent stationary objects very far from the ego vehicle 10 which are not of high interest. Some embodiments of the invention also include as the pre-filtering step 806 the removal of detections that have a longitudinal position at this point (for example, given by an abs(Y) axis value smaller than a threshold (e.g. 1.5 m)) as this will ensure any detections in front of or behind the ego vehicle are removed, as guard rails and the like should not be found in such positions.

The remaining stationary detections 70 are then allocated into one or more groups according to their lateral position from the ego vehicle 10 (step 810). In some examples, each of the one or more groups is associated with a range of lateral positions which is non-overlapping, meaning each stationary detection 70 belongs to one and only one group. In some embodiments a histogram over the lateral distance from the ego vehicle is formed from the remaining detections in which each group is represented by a bin in the histogram.

In some embodiments, one or more of the lateral groups of stationary detections are then ordered relative to the ego vehicle's position and one or more laterally ordered groups may be selected based on group lateral position characteristics meeting one or more lateral group selection criteria (step 812). For example, in some embodiments, a crest factor or peak over average of each ordered group of sensed detections which allocated to a each bin is calculated. In some examples, the average is calculated separately for the bins on the left hand side to the average for bins on the right hand side. If a bin has a crest factor over a threshold (e.g. 4.0) and the number of sensed detections in the bin is over a threshold (e.g. 10) then the detections in that bin is classified as belonging to a guard rail candidate.

The method then determines the regularity of distances between sequential pairs of stationary detections in the direction faced by the ego vehicle 10 in each selected group (step 814), for example, as described above.

For example, in some embodiments, for each selected bin where the number of sensed detections is over a threshold number and where the bin has a crest factor in the histogram which is over a threshold, the selected bin or group is considered a group of sensed guard rail candidate detections. For each selected group, a histogram is created over the differences between the longitudinal positions (which can be expressed in some embodiments as the differences between longitudinal position values along the longitudinal axis of the ego vehicle) for all the sensed (e.g. radar) detections belonging to that candidate group or bin.

Next the method shown in Fig. 8 determines if the regularity of each selected lateral grouping of stationary detections meets one or more selection regularity criteria (step 816), for example, as described herein above, by sequentially ordering sensed detections in the longitudinal direction and determining the differences in longitudinal position between adjacent stationary detections. This allows the difference in longitudinal positions between pairs of stationary detections to be determined and plotted for each lateral grouping. In some embodiments, a histogram is created over the difference between the X values for all the radar detections belonging to one of the one or more laterally selected candidate groups

For example, in some embodiments, if the strongest peak in the second histogram is above a high threshold (e.g. 20) then the corresponding detections are classified (step 818) or tagged is belonging to a pre-determined type of stationary object, for example, to an elongate object such as a barrier or guard rail (see Fig. 6 for an example showing this). In other words, if the majority of sensed detections at a particular lateral distance from the ego-vehicle exhibit regular positions in the longitudinal direction (i.e. in a direction parallel to the longitudinal axis of the ego vehicle), some embodiments of the methods of detecting a stationary object of a predetermined type disclosed here regard that lateral group of stationary detections as being likely to be a group of stationary objects that all belong to a guard rail or barrier or similar type of object. This allows the entire lateral group of stationary detections to be discarded before they are subjected to any additional analysis (e.g. by the main processing component 28) in some embodiments at group level (step 820). In other words, in some example embodiments of the method, the stationary detections which are detected (or classified) as detections of the predetermined type of stationary object, i.e. as barrier or guard rail detections, are removed from the output (step 820).

In some other example embodiments of the method, instead of just discarding, a group confidence score is determined which can be associated with the sensed stationary detections in that group.

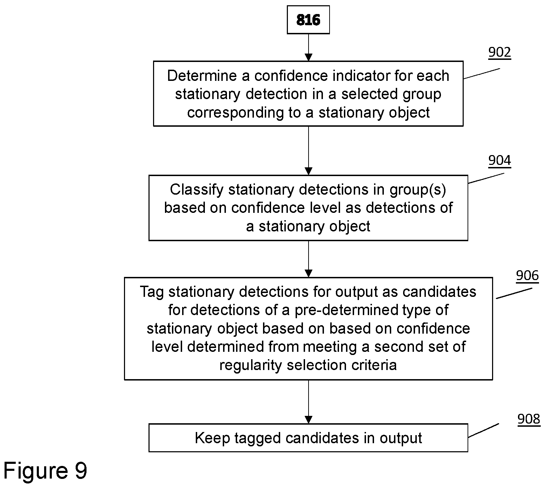

Fig. 9 shows an example embodiment of a method where following the step of determining if regularity of each selected group meets one or more regularity selection criteria (step 816 in Fig. 8), a confidence indicator is determined for each stationary detection in a selected group classified as corresponding to a particular type of stationary object (step 902). The stationary detections in each selected group are then classified according to their determined confidence level as being detections of that type of stationary object (step 904). Stationary sensed detections are then tagged for output as candidates for sensed detections of that pre-determined type of stationary object based on based on the confidence level determined from meeting the second set of regularity selection criteria (step 906), and instead of discarding the tagged candidates they are retained in the output (step 908).

In some embodiments, not all tagged candidates are retained in step 908, for example if the regularity selection criteria may provide a first threshold above which sensed detections are automatically discarded and removed from the output, and the second set of regularity criteria may provide a lower second threshold, above which the sensed detections are tagged as candidates for sensed detections of that type of pre-determined object.

In some example embodiments, for example, if the strongest peak in the second histogram (representing regularity of spacings of sensed detections in the longitudinal direction) is below the high threshold but still above a lower threshold (e.g. 12) such as that shown in Fig. 6. then the corresponding sensed detections are tagged as being candidate sensed detections for that type of pre-determined object (i.e. as guard rail candidate detections if the pre-determined type of object is a guard rail). Even if there is lower confidence that there is a true guard rail, this information can still be useful in succeeding algorithms. If the peak is below the lower threshold then no guard rail tagging is done.

In some embodiments, in each group of guard rail detections (i.e. in each guard rail bin), the method also classifies dynamic radar detections that are within a specified longitudinal range (relative to the ego vehicle)_such as, for example, within +- 5 m) of the guard rail as belonging to a guard rail. The reason is that at the sides of the ego vehicle the radar range rate might not show stationary even if the detections are from a stationary object. This kind of detections are however very problematic for tracking algorithms so it is important to classify them as guard rail detections.

Reverting back now to Fig. 5, this shows an example where the algorithm, for example, as implemented by the steps shown in Fig. 9, has classified stationary detections. In Fig. 5, the black dots in regions 78a represent unclassified stationary or moving detections outside the lateral boundaries, and the black dots 78b are unclassified stationary or moving detections which are within the proximal lateral boundary limits and outside any proximal region longitudinal limits.

The white circles represent stationary sensed detections classified as belonging to guard rails with a high degree of confidence and the crosses "x" represent stationary sensed detections for which there is a lower degree of confidence that they represent a guard rail (where here a guard rail is the particular type of pre-determined object referred to in the earlier embodiments and accompanying drawings). Fig. 5 also shows the position of the ego vehicle 10. In Figure 5, it is clear that a number of sensed detections 80, 82 are aligned in the longitudinal direction parallel to the direction the ego vehicle is facing (in other words, the share the same lateral position).

Such detections will give rise to peaks when the detections are laterally grouped (similar to, for example, the detections shown in bin 13-16 and bin 36-37 in Fig. 4 which passed the crest factor check (see also step 812 in Fig. 8)) which makes them guard rail candidates. For each of these six bins comprising groups of candidate sensed stationary object detections, a second histogram is created for the regularity check. In the example shown in Figure 4, only bin 13-16 would pass the regularity check in step (816) meaning the sensed detections in bin 13-16 could be discarded in a batch as being detections of a stationary guard rail). In contrast, whilst bin 36-37 did not pass step (812) as it did pass step 816, and so its members were tagged as candidate guard rail detections.

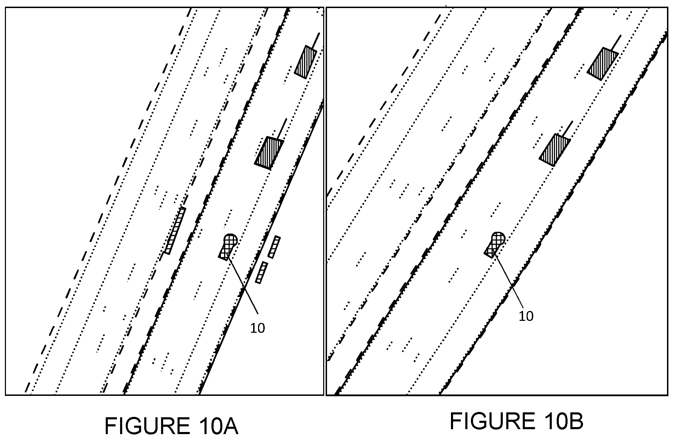

Fig. 10A illustrates an example of sensed detections by an ego-vehicle before a method in accordance with some of the embodiments of the technology disclosed herein is performed. As shown in Fig. 10A, to the left and right of the ego vehicle 10 are some prominent false objects (also referred to as ghost objects or ghosts) these are shown as a horizontally hatched objects in Fig. 10A and are removed after a method according to the disclosed technology is performed.

Fig. 10B illustrates how some of the sensed detections which were shown horizontally hatched as they were ghosts (as shown in Fig. 10A), have been removed after a method of detecting a stationary object of a pre-determined type such as a guard rail or barrier in accordance with some of the embodiments of the technology disclosed herein has been performed. As shown in Figure 10B, the remaining objects are not ghosts and this demonstrates how the disclosed methods can effectively declutter the number of detections the perception system 14 must track.

The present disclosure has been presented above with reference to specific embodiments. However, other embodiments than the above described are possible and within the scope of the disclosure. Different method steps than those described above, performing the method by hardware or software, may be provided within the scope of the disclosure. Thus, according to an exemplary embodiment, there is provided a non-transitory computer-readable storage medium storing one or more programs configured to be executed by one or more processors of a vehicle control system, the one or more programs comprising instructions for performing the method according to any one of the above-discussed embodiments. Alternatively, according to another exemplary embodiment a cloud computing system can be configured to perform any of the methods presented herein. The cloud computing system may comprise distributed cloud computing resources that jointly perform the methods presented herein under control of one or more computer program products.

Generally speaking, a computer-accessible medium may include any tangible or non-transitory storage media or memory media such as electronic, magnetic, or optical media-e.g., disk or CD/DVD-ROM coupled to computer system via bus. The terms "tangible" and "non-transitory," as used herein, are intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer-readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link.

The processor(s) 40 associated with the perception system 14 (and those associated with the general control system 12 of the vehicle 10) may be or include any number of hardware components for conducting data or signal processing or for executing computer code stored in a memory 42 the perception system 14 and/or of the control system 12.

Memory 42 may be one or more devices for storing data and/or computer code for completing or facilitating the various methods described in the present description. The memory may include volatile memory or non-volatile memory. The memory may include database components, object code components, script components, or any other type of information structure for supporting the various activities of the present description. According to an exemplary embodiment, any distributed or local memory device may be utilized with the systems and methods of this description. According to an exemplary embodiment the memory 42 is communicably connected to the processor 40 (e.g., via a circuit or any other wired, wireless, or network connection) and includes computer code for executing one or more processes described herein.

It should be appreciated that the sensor interface 44 shown in Fig. 1B may also provide the possibility to acquire sensor data directly or via dedicated sensor control circuitry in the vehicle 10 . The data communication interfaces 46 may comprise one or more antenna interfaces which further provide a possibility to send output from the perception system 14 to a remote location (e.g. remote operator or control centre) by means of a vehicle antenna/antenna array. Moreover, some sensors in the vehicle 10 may communicate with the control system 12 using a local network setup, such as CAN bus, I2C, Ethernet, optical fibres, and so on. The communication interface 46 accordingly is arranged to communicate with other control functions of the vehicle 10 in some example embodiments and as such also functions as a control interface also; however, a separate control interface (not shown) may be provided. Local communication within the vehicle may also be of a wireless type with protocols such as Wi-Fi, LoRa, Zigbee, Bluetooth, or similar mid/short range technologies.

Accordingly, it should be understood that parts of the described solution may be implemented either in the vehicle, in a system located external the vehicle, or in a combination of internal and external the vehicle; for instance in a server in communication with the vehicle, a so called cloud solution. For instance, sensor data may be sent to an external system and that system performs the steps to defining the costs for going from one state to the other. The different features and steps of the embodiments may be combined in other combinations than those described.

The main processing component 28 and the pre-processing component 26 shown in Figure 1A and referred to in the above description of the embodiments of the invention may be implemented at least in part by circuitry and may share some or all of the circuitry, or may use separate circuit implementations.

It should be noted that the word "comprising" does not exclude the presence of other elements or steps than those listed and the words "a" or "an" preceding an element do not exclude the presence of a plurality of such elements. It should further be noted that any reference signs do not limit the scope of the claims, that the invention may be at least in part implemented by means of both hardware and software, and that several "means" or "units" may be represented by the same item of hardware.

Although the figures may show a specific order of method steps, the order of the steps may differ from what is depicted. In addition, two or more steps may be performed concurrently or with partial concurrence. For example, the steps of receiving signals comprising information about a movement and information about a current road scenario may be interchanged based on a specific realization. Such variation will depend on the software and hardware systems chosen and on designer choice. All such variations are within the scope of the disclosure. Likewise, software implementations could be accomplished with standard programming techniques with rule-based logic and other logic to accomplish the various connection steps, processing steps, comparison steps and decision steps.

## Claims

1. A method implemented by a control system (12) of an ego-vehicle (10), the method comprising:
receiving (700, 800) sensor signal data comprising stationary and non-stationary detections from a surrounding environment of the ego-vehicle;
determining (702) at least one group of stationary detections which meet one or more lateral position selection criteria based on the lateral position of each stationary detection from a direction faced by the ego-vehicle;
determining (704) at least one group of stationary detections which meet one or more group regularity selection criteria based on the regularity of the differences in position between pairs of sequentially positioned stationary detections in the group in the direction faced by the ego vehicle;
determining (706) one or more groups of stationary detections which meet the lateral selection criteria and the group regularity selection criteria for being a group of stationary detections corresponding to at least one stationary object; and
**characterized by** removing (708) the stationary detections meeting both selection criteria and corresponding to at least one pre-determined type of stationary object from the sensor signal data output to one or more data processing components (28) of the control system (12).

2. A method as claimed in claim 1, wherein determining (706) one or more groups of stationary detections which meet the lateral selection criteria and the group regularity selection criteria for being a group of stationary detections corresponding to at least one stationary object comprises:
the determining (702) of at least one lateral group of stationary detections which meet one or more lateral position selection criteria based on the lateral position of each group comprising stationary detections from the direction faced by the ego-vehicle; and
the determining (704), for each at least one lateral group of stationary detections, if that lateral group meets the one or more group regularity selection criteria, and if so, determining the stationary detections in that lateral group correspond to at least one stationary object.

3. A method as claimed in claim 1 or 2, wherein determining (704) at least one group of stationary detections which meet one or more group regularity selection criteria comprises:
determining, for each stationary detection in a said at least one group, the distance in the position of the stationary detection from the ego vehicle in a direction faced by the ego vehicle;
determining (814) a set of differences in distance between pairs of sequentially ordered positions from the position of the ego vehicle; and
determining (816) if the determined set of differences in distance meet at least one distance regularity criteria.

4. A method as claimed in claim 3 , wherein the distance regularity criteria comprise at least a criterion that the differences in distance of the sensed detections in each selected lateral group in the longitudinal direction relative to the ego vehicle are below a predetermined threshold.

5. A method as claimed in claim 3 or 4, wherein the distance regularity criteria comprise at least the distances being within a pre-determined range of distances

6. A method as claimed in any previous claim, wherein determining (702) a group of stationary detections which meet one or more lateral position selection criteria based on the lateral position of each stationary detection from the direction faced by the ego-vehicle comprises control circuitry comprises:
determining (804) lateral positions of stationary detections from the received signal relative to the direction faced by the ego vehicle;
allocating (806) the stationary detections into lateral groups based on their lateral position;
laterally ordering (810) the lateral groups based on their lateral positions from the direction faced by the ego vehicle of each group;
determining if the number of stationary detections in each lateral group associated with a range of lateral positions meets a membership number threshold;
determining, for each laterally ordered group of stationary detections which meet the minimum membership threshold, if the number of stationary detections in that group compared to the average number of stationary detections in one or more of the neighbouring laterally ordered groups meets a peak threshold condition.

7. A method as claimed any previous claim, wherein removing (708) the stationary detections corresponding to a stationary object comprises:
classifying (818) each stationary detection in a group meeting the selection criteria as a stationary sensed detection corresponding to a pre-determined type of stationary object; and
filtering out (820) the group of classified stationary detections from the sensor signal data output to one or more data processing components (28) of the ego-vehicle control system (12).

8. A method as claimed in claim 7, further comprising:
determining (902) a confidence for the regularity of the stationary detections corresponding to a pre-determined type of stationary object;
removing (820) the stationary detections from the sensor signal data output to one or more data processing components (22) of the ego-vehicle control system (12), in dependence on a confidence assessment that a stationary detection corresponds to the pre-determined type of stationary object; and
outputting an indication of the classification and/or its associated confidence assessment of each candidate stationary object sensed detection.

9. A method as claimed in any previous claim, wherein the pre-determined type of stationary object (52,58, 68) is positioned adjacent to the road segment along the direction faced by the ego-vehicle and comprises one or more of:
an elongate structure; and/or
a barrier; and/or
a guard rail.

10. A method as claimed in any previous claim, wherein the method is implemented by a pre-processing component (26) which is configured to provide the output to the one or more other sensor signal processing components (28) of the control system (12) of the ego vehicle (10).

11. A method as claimed in any previous claim, wherein the one or more other data processing components (28) of the control system (12) comprise one or more of the following types of components:
a sensor data fusion processing component;
a target tracking processing component; and
a road estimation component.

12. A method as claimed in any preceding claim, wherein the sensor signals comprise radar signals generated by an array of one or more radar sensors (16) of the ego-vehicle (10).

13. A control system configured to implement a method for detecting stationary objects as claimed in any previous claim, the control system comprising:
means for receiving (700) sensor signal data comprising stationary and non-stationary detections from a surrounding environment of the ego-vehicle;
means for determining (702) at least one group of stationary detections which meet one or more lateral position selection criteria based on the lateral position of each stationary detection from a direction faced by the ego-vehicle;
mean for determining (704), at least one group of stationary detections which meet one or more group regularity selection criteria based on the regularity of the differences in position between pairs of sequentially positioned stationary detections in the group in the direction faced by the ego vehicle;
means for determining (706) one or more groups of stationary detections which meet the lateral selection criteria and the group regularity selection criteria for being a group of stationary detections corresponding to at least one stationary object; and
**characterized by** means for removing (708) the stationary detections meeting both criteria and corresponding to at least one stationary object from the sensor signal data output to one or more data processing components (28) of the control system (12).

14. A vehicle (10) comprising:
a control system (12) as claimed in claim 13, wherein the control system (12) includes:
velocity determining means (20, 22) comprising an inertial monitoring unit (20) and a localisation system (22) for monitoring a velocity of the vehicle (10);
a perception system (14) comprising at least one sensor (16, 18) for monitoring a surrounding environment (32) of the vehicle (10).

15. A computer-readable storage medium storing one or more programs configured to be executed by one or more processors of a vehicle control system, the one or more programs comprising instructions for performing a method according to any one of claims 1 to 12.

## Patentansprüche

1. Verfahren, umgesetzt von einem Steuersystem (12) eines Ego-Fahrzeugs (10), wobei das Verfahren Folgendes umfasst:
Empfangen (700, 800) von Sensorsignaldaten, umfassend stationäre und nicht-stationäre Detektionen aus einer Umgebung des Ego-Fahrzeugs;
Bestimmen (702) mindestens einer Gruppe stationärer Detektionen, die ein oder mehrere Auswahlkriterien für die laterale Position erfüllen, basierend auf der lateralen Position jeder stationären Detektion aus einer Richtung, in die das Ego-Fahrzeug zeigt;
Bestimmen (704) mindestens einer Gruppe stationärer Detektionen, die ein oder mehrere Auswahlkriterien für Gruppenregelmäßigkeit erfüllen, basierend auf der Regelmäßigkeit der Positionsunterschiede zwischen Paaren von nacheinander positionierten stationären Detektionen in der Gruppe in der Richtung, in die das Ego-Fahrzeug zeigt;
Bestimmen (706) einer oder mehrerer Gruppen stationärer Detektionen, welche die lateralen Auswahlkriterien und die Auswahlkriterien für Gruppenregelmäßigkeit erfüllen, um eine Gruppe stationärer Detektionen zu sein, die mindestens einem stationären Objekt entsprechen; und
**gekennzeichnet durch** Entfernen (708) der stationären Detektionen, die beide Auswahlkriterien erfüllen und mindestens einem vorbestimmten Typ eines stationären Objekts entsprechen, aus den Sensorsignaldaten, die an eine oder mehrere Datenverarbeitungskomponenten (28) des Steuersystems (12) ausgegeben werden.

2. Verfahren nach Anspruch 1, wobei das Bestimmen (706) einer oder mehrerer Gruppen stationärer Detektionen, welche die lateralen Auswahlkriterien und die Auswahlkriterien für Gruppenregelmäßigkeit erfüllen, um eine Gruppe stationärer Detektionen zu sein, die mindestens einem stationären Objekt entsprechen, Folgendes umfasst:
das Bestimmen (702) mindestens einer lateralen Gruppe stationärer Detektionen, die ein oder mehrere Auswahlkriterien für die laterale Position erfüllen, basierend auf der lateralen Position jeder Gruppe, umfassend stationäre Detektionen aus der Richtung, in die das Ego-Fahrzeug zeigt; und
das Bestimmen (704), für jede mindestens eine laterale Gruppe stationärer Detektionen, ob diese laterale Gruppe das eine oder die mehreren Auswahlkriterien für Gruppenregelmäßigkeit erfüllt, und, wenn ja, Bestimmen, dass die stationären Detektionen in der lateralen Gruppe dem mindestens einen stationären Objekt entsprechen.

3. Verfahren nach Anspruch 1 oder 2, wobei das Bestimmen (704) mindestens einer Gruppe stationärer Detektionen, die ein oder mehrere Auswahlkriterien für Gruppenregelmäßigkeit erfüllen, Folgendes umfasst:
Bestimmen, für jede stationäre Detektion in einer der mindestens einen Gruppe, des Abstands der Position der stationären Detektion von dem Ego-Fahrzeug in einer Richtung, in die das Ego-Fahrzeug zeigt;
Bestimmen (814) eines Satzes von Abstandsunterschieden zwischen Paaren von nacheinander angeordneten Positionen von der Position des Ego-Fahrzeugs; und
Bestimmen (816), ob der bestimmte Satz von Abstandsunterschieden mindestens ein Abstandsregelmäßigkeitskriterium erfüllt.

4. Verfahren nach Anspruch 3, wobei die Abstandsregelmäßigkeitskriterien mindestens ein Kriterium umfassen, dass die Abstandsunterschiede der erfassten Detektionen in jeder ausgewählten lateralen Gruppe in der Längsrichtung relativ zu dem Ego-Fahrzeug unter einem vorbestimmten Schwellenwert liegen.

5. Verfahren nach Anspruch 3 oder 4, wobei die Abstandsregelmäßigkeitskriterien mindestens die Abstände umfassen, die innerhalb eines vorbestimmten Abstandsbereichs liegen.

6. Verfahren nach einem der vorhergehenden Ansprüche, wobei das Bestimmen (702) einer Gruppe stationärer Detektionen, die ein oder mehrere Auswahlkriterien für die laterale Position erfüllen, basierend auf der lateralen Position jeder stationären Detektion aus der Richtung, in die das Ego-Fahrzeug zeigt, eine Steuerschaltung umfasst und Folgendes umfasst:
Bestimmen (804) lateraler Positionen stationärer Detektionen anhand des empfangenen Signals in Bezug auf die Richtung, in die das Ego-Fahrzeug zeigt;
Zuordnen (806) der stationären Detektionen zu lateralen Gruppen basierend auf ihrer lateralen Position;
laterales Anordnen (810) der lateralen Gruppen basierend auf ihren lateralen Positionen anhand der Richtung, in die das Ego-Fahrzeug jeder Gruppe zeigt;
Bestimmen, ob die Anzahl stationärer Detektionen in jeder lateralen Gruppe, die einem Bereich lateraler Positionen zugeordnet ist, einen Schwellenwert für die Mitgliederanzahl erreicht;
Bestimmen, für jede lateral angeordnete Gruppe stationärer Detektionen, die den Mindestmitgliederanzahlschwellenwert erreichen, ob die Anzahl stationärer Detektionen in der Gruppe im Vergleich zu der durchschnittlichen Anzahl stationärer Detektionen in einer oder mehrerer der benachbarten lateral angeordneten Gruppen eine Spitzenschwellenwertbedingung erfüllt.

7. Verfahren nach einem der vorhergehenden Ansprüche, wobei das Entfernen (708) der stationären Detektionen, die einem stationären Objekt entsprechen, Folgendes umfasst:
Klassifizieren (818) jeder stationären Detektion in einer Gruppe, welche die Auswahlkriterien erfüllt, als eine stationär erfasste Detektion, die einem vorbestimmten Typ eines stationären Objekts entspricht; und
Herausfiltern (820) der Gruppe klassifizierter stationärer Detektionen aus den Sensorsignaldaten, die an eine oder mehrere Datenverarbeitungskomponenten (28) des Ego-FahrzeugSteuersystems (12) ausgegeben werden.

8. Verfahren nach Anspruch 7, ferner umfassend:
Bestimmen (902) einer Konfidenz für die Regelmäßigkeit der stationären Detektionen, die einem vorbestimmten Typ eines stationären Objekts entsprechen;
Entfernen (820) der stationären Detektionen aus den Sensorsignaldaten, die an eine oder mehrere Datenverarbeitungskomponenten (22) des Ego-FahrzeugSteuersystems (12) ausgegeben werden, in Abhängigkeit von einer Konfidenzbewertung, dass eine stationäre Detektion dem vorbestimmten Typ eines stationären Objekts entspricht; und
Ausgeben einer Anzeige der Klassifizierung und/oder der zugeordneten Konfidenzbewertung für jede erfasste Detektion eines stationären Kandidatenobjekts.

9. Verfahren nach einem der vorhergehenden Ansprüche, wobei der vorbestimmte Typ eines stationären Objekts (52, 58, 68) neben dem Straßenabschnitt entlang in der Richtung, in die das Ego-Fahrzeug zeigt, positioniert ist und eines oder mehrere der Folgenden umfasst:
eine längliche Struktur; und/oder
eine Barriere; und/oder
eine Leitplanke.

10. Verfahren nach einem der vorhergehenden Ansprüche, wobei das Verfahren durch eine Vorverarbeitungskomponente (26) umgesetzt wird, die dazu konfiguriert ist, die Ausgabe an die eine oder die mehreren anderen Sensorsignalverarbeitungskomponenten (28) des Steuersystems (12) des Ego-Fahrzeugs (10) bereitzustellen.

11. Verfahren nach einem der vorhergehenden Ansprüche, wobei die eine oder die mehreren anderen Datenverarbeitungskomponenten (28) des Steuersystems (12) einen oder mehrere der folgenden Komponententypen umfassen:
eine Sensordatenfusionsverarbeitungskomponente;
eine Zielverfolgungsverarbeitungskomponente; und
eine Straßenschätzkomponente.

12. Verfahren nach einem der vorhergehenden Ansprüche, wobei die Sensorsignale Radarsignale umfassen, die von einer Anordnung aus einem oder mehreren Radarsensoren (16) des Ego-Fahrzeugs (10) erzeugt werden.

13. Steuersystem, das dazu konfiguriert ist, ein Verfahren zum Detektieren stationärer Objekte nach einem der vorhergehenden Ansprüche umzusetzen, wobei das Steuersystem Folgendes umfasst:
Mittel zum Empfangen (700) von Sensorsignaldaten, umfassend stationäre und nicht-stationäre Detektionen aus einer Umgebung des Ego-Fahrzeugs;
Mittel zum Bestimmen (702) mindestens einer Gruppe stationärer Detektionen, die ein oder mehrere Auswahlkriterien für die laterale Position erfüllen, basierend auf der lateralen Position jeder stationären Detektion aus einer Richtung, in die das Ego-Fahrzeug zeigt;
Mittel zum Bestimmen (704) mindestens einer Gruppe stationärer Detektionen, die ein oder mehrere Auswahlkriterien für Gruppenregelmäßigkeit erfüllen, basierend auf der Regelmäßigkeit der Positionsunterschiede zwischen Paaren von nacheinander positionierten stationären Detektionen in der Gruppe in der Richtung, in die das Ego-Fahrzeug zeigt;
Mittel zum Bestimmen (706) einer oder mehrerer Gruppen stationärer Detektionen, welche die lateralen Auswahlkriterien und die Auswahlkriterien für Gruppenregelmäßigkeit erfüllen, um eine Gruppe stationärer Detektionen zu sein, die mindestens einem stationären Objekt entsprechen; und
**gekennzeichnet durch** Mittel zum Entfernen (708) der stationären Detektionen, die beide Kriterien erfüllen und mindestens einem stationären Objekt entsprechen, aus den Sensorsignaldaten, die an eine oder mehrere Datenverarbeitungskomponenten (28) des Steuersystems (12) ausgegeben werden.

14. Fahrzeug (10), umfassend:
ein Steuersystem (12) nach Anspruch 13, wobei das Steuersystem (12) Folgendes beinhaltet:
Mittel zur Geschwindigkeitsbestimmung (20, 22), umfassend eine Trägheitsüberwachungseinheit (20) und ein Lokalisierungssystem (22) zum Überwachen einer Geschwindigkeit des Fahrzeugs (10);
ein Wahrnehmungssystem (14), umfassend mindestens einen Sensor (16, 18) zum Überwachen einer Umgebung (32) des Fahrzeugs (10).

15. Computerlesbares Speichermedium, das ein oder mehrere Programme speichert, die dazu konfiguriert sind, von einem oder mehreren Prozessoren eines Fahrzeugsteuersystems ausgeführt zu werden, wobei das eine oder die mehreren Programme Anweisungen zum Durchführen eines Verfahrens nach einem der Ansprüche 1 bis 12 umfassen.

## Revendications

1. Procédé mis en oeuvre par un système de commande (12) d'un véhicule soumis à l'essai (10), le procédé comprenant :
la réception (700, 800) de données de signal de capteur comprenant des détections stationnaires et non stationnaires provenant d'un environnement du véhicule soumis à l'essai ;
la détermination (702) d'au moins un groupe de détections stationnaires qui répondent à un ou plusieurs critères de sélection de position latérale sur la base de la position latérale de chaque détection stationnaire à partir d'une direction à laquelle fait face le véhicule soumis à l'essai ;
la détermination (704) d'au moins un groupe de détections stationnaires qui répondent à un ou plusieurs critères de sélection de régularité de groupe sur la base de la régularité des différences de position entre des paires de détections stationnaires positionnées séquentiellement dans le groupe dans la direction à laquelle fait face le véhicule soumis à l'essai ;
la détermination (706) d'un ou plusieurs groupes de détections stationnaires qui répondent aux critères de sélection latérale et aux critères de sélection de régularité de groupe pour être un groupe de détections stationnaires correspondant à au moins un objet stationnaire ; et
**caractérisé par** l'élimination (708) des détections stationnaires répondant aux deux critères de sélection et correspondant à au moins un type prédéterminé d'objet stationnaire à partir des données de signal de capteur délivrées en sortie à un ou plusieurs composants de traitement de données (28) du système de commande (12).

2. Procédé selon la revendication 1, dans lequel la détermination (706) d'un ou plusieurs groupes de détections stationnaires qui répondent aux critères de sélection latérale et aux critères de sélection de régularité de groupe pour être un groupe de détections stationnaires correspondant à au moins un objet stationnaire comprend :
la détermination (702) d'au moins un groupe latéral de détections stationnaires qui répondent à un ou plusieurs critères de sélection de position latérale sur la base de la position latérale de chaque groupe comprenant des détections stationnaires à partir de la direction à laquelle fait face le véhicule soumis à l'essai ; et
la détermination (704), pour chaque au moins un groupe latéral de détections stationnaires, si ce groupe latéral répond à l'un ou plusieurs critères de sélection de régularité de groupe, et si tel est le cas, la détermination des détections stationnaires dans ce groupe latéral correspondant à au moins un objet stationnaire.

3. Procédé selon la revendication 1 ou 2, dans lequel la détermination (704) d'au moins un groupe de détections stationnaires qui répondent à un ou plusieurs critères de sélection de régularité de groupe comprend :
la détermination, pour chaque détection stationnaire dans ledit au moins un groupe, de la distance de la position de la détection stationnaire par rapport au véhicule soumis à l'essai dans une direction à laquelle fait face le véhicule soumis à l'essai ;
la détermination (814) d'un ensemble de différences de distance entre des paires de positions ordonnées séquentiellement à partir de la position du véhicule soumis à l'essai ; et
la détermination (816) si l'ensemble déterminé de différences de distance répond à au moins un critère de régularité de distance.

4. Procédé selon la revendication 3, dans lequel les critères de régularité de distance comprennent au moins un critère selon lequel les différences de distance des détections détectées dans chaque groupe latéral sélectionné dans la direction longitudinale par rapport au véhicule soumis à l'essai sont inférieures à un seuil prédéterminé.

5. Procédé selon la revendication 3 ou 4, dans lequel les critères de régularité de distance comprennent au moins les distances étant dans une plage prédéterminée de distances.

6. Procédé selon l'une quelconque des revendications précédentes, dans lequel la détermination (702) d'un groupe de détections stationnaires qui répondent à un ou plusieurs critères de sélection de position latérale sur la base de la position latérale de chaque détection stationnaire à partir de la direction à laquelle fait face le véhicule soumis à l'essai comprend un circuit de commande comprenant :
la détermination (804) de positions latérales de détections stationnaires à partir du signal reçu par rapport à la direction à laquelle fait face le véhicule soumis à l'essai ;
l'attribution (806) des détections stationnaires en groupes latéraux sur la base de leur position latérale ;
l'ordonnancement latéral (810) des groupes latéraux sur la base de leurs positions latérales à partir de la direction à laquelle fait face le véhicule soumis à l'essai de chaque groupe ;
la détermination si le nombre de détections stationnaires dans chaque groupe latéral associé à une plage de positions latérales répond à un seuil de nombre d'appartenance ;
la détermination, pour chaque groupe ordonné latéralement de détections stationnaires qui répond au seuil d'appartenance minimal, si le nombre de détections stationnaires dans ce groupe comparé au nombre moyen de détections stationnaires dans un ou plusieurs groupes parmi les groupes ordonnés latéralement voisins répond à une condition de seuil de pic.

7. Procédé selon l'une quelconque des revendications précédentes, dans lequel l'élimination (708) des détections stationnaires correspondant à un objet stationnaire comprend :
la classification (818) de chaque détection stationnaire dans un groupe répondant aux critères de sélection en tant que détection détectée stationnaire correspondant à un type prédéterminé d'objet stationnaire ; et
le filtrage (820) du groupe de détections stationnaires classifiées à partir des données de signal de capteur délivrées en sortie à un ou plusieurs composants de traitement de données (28) du système de commande de véhicule soumis à l'essai (12).

8. Procédé selon la revendication 7, comprenant en outre :
la détermination (902) d'une confiance pour la régularité des détections stationnaires correspondant à un type prédéterminé d'objet stationnaire ;
l'élimination (820) des détections stationnaires à partir des données de signal de capteur délivrées en sortie à un ou plusieurs composants de traitement de données (22) du système de commande de véhicule soumis à l'essai (12), en fonction d'une évaluation de confiance selon laquelle une détection stationnaire correspond au type prédéterminé d'objet stationnaire ; et
la délivrance en sortie d'une indication de la classification et/ou de son évaluation de confiance associée de chaque détection détecté d'objet stationnaire candidat.

9. Procédé selon l'une quelconque des revendications précédentes, dans lequel le type prédéterminé d'objet stationnaire (52, 58, 68) est positionné adjacent au segment de route le long de la direction vers laquelle fait face le véhicule soumis à l'essai et comprend un ou plusieurs éléments parmi :
une structure allongée ; et/ou
une barrière ; et/ou
un rail de sécurité.

10. Procédé selon l'une quelconque des revendications précédentes, dans lequel le procédé est mis en oeuvre par un composant de prétraitement (26) qui est configuré pour fournir la sortie à l'un ou plusieurs autres composants de traitement de signal de capteur (28) du système de commande (12) du véhicule soumis à l'essai (10).

11. Procédé selon l'une quelconque des revendications précédentes, dans lequel l'un ou plusieurs autres composants de traitement de données (28) du système de commande (12) comprennent un ou plusieurs composants parmi les types de composants suivants :
un composant de traitement de fusion de données de capteur ;
un composant de traitement de suivi de cible ; et
un composant d'estimation de route.

12. Procédé selon l'une quelconque des revendications précédentes, dans lequel les signaux de capteur comprennent des signaux de radar générés par un réseau d'un ou plusieurs capteurs de radar (16) du véhicule soumis à l'essai (10).

13. Système de commande configuré pour mettre en oeuvre un procédé de détection d'objets stationnaires selon l'une quelconque des revendications précédentes, le système de commande comprenant :
des moyens pour recevoir (700) des données de signal de capteur comprenant des détections stationnaires et non stationnaires provenant d'un environnement du véhicule soumis à l'essai ;
des moyens pour déterminer (702) au moins un groupe de détections stationnaires qui répondent à un ou plusieurs critères de sélection de position latérale sur la base de la position latérale de chaque détection stationnaire à partir d'une direction à laquelle fait face le véhicule soumis à l'essai ;
des moyens pour déterminer (704) au moins un groupe de détections stationnaires qui répondent à un ou plusieurs critères de sélection de régularité de groupe sur la base de la régularité des différences de position entre des paires de détections stationnaires positionnées séquentiellement dans le groupe dans la direction à laquelle fait face le véhicule soumis à l'essai ;
des moyens pour déterminer (706) un ou plusieurs groupes de détections stationnaires qui répondent aux critères de sélection latérale et aux critères de sélection de régularité de groupe pour être un groupe de détections stationnaires correspondant à au moins un objet stationnaire ; et
**caractérisé par** des moyens pour éliminer (708) les détections stationnaires répondant aux deux critères et correspondant à au moins un objet stationnaire à partir des données de signal de capteur délivrées en sortie à un ou plusieurs composants de traitement de données (28) du système de commande (12).

14. Véhicule (10) comprenant :
un système de commande (12) selon la revendication 13, dans lequel le système de commande (12) inclut :
des moyens de détermination de vitesse (20, 22) comprenant une unité de surveillance inertielle (20) et un système de localisation (22) pour surveiller une vitesse du véhicule (10) ;
un système de perception (14) comprenant au moins un capteur (16, 18) pour surveiller un environnement (32) du véhicule (10).

15. Support de stockage lisible par ordinateur stockant un ou plusieurs programmes configurés pour être exécutés par un ou plusieurs processeurs d'un système de commande de véhicule, l'un ou plusieurs programmes comprenant des instructions pour mettre en oeuvre un procédé selon l'une quelconque des revendications 1 à 12.
